# EUROPEAN PATENT SPECIFICATION

(11) **EP 4 467 430 B1**
(45) Date of publication and mention of the grant of the patent: **15.07.2026**
(21) Application number: 24177518.8
(22) Date of filing: 23.05.2024
(51) Int. Cl.: B62J 6/055, B62J 6/16, B62K 23/02, B62K 11/00, B62M 7/00, H01H 15/24, H01H 23/30

(54) **STRADDLED VEHICLE**
GRÄTSCHSITZFAHRZEUG
VÉHICULE À SELLE

(30) Priority: 24.05.2023 JP 2023085195
(43) Date of publication of application: 27.11.2024
(73) Proprietor: Yamaha Hatsudoki Kabushiki Kaisha, Iwata-shi, Shizuoka 438-8501 (JP); TOYO DENSO KABUSHIKI KAISHA, Minato-ku Tokyo 105-0004 (JP)
(72) Inventor: Ikegaya, Ryosuke, Iwata-shi, Shizuoka, 438-8501 (JP); Uchida, Shinichi, Iwata-shi, Shizuoka, 438-8501 (JP); Horiuchi, Tomoki, Iwata-shi, Shizuoka, 438-8501 (JP); Nagata, Kazuki, Tsurugashima-shi, Saitama, 350-2280 (JP); Tanaka, Yumiko, Tsurugashima-shi, Saitama, 350-2280 (JP); Yamamoto, Kazuyoshi, Tsurugashima-shi, Saitama, 350-2280 (JP); Jimbo, Koji, Tsurugashima-shi, Saitama, 350-2280 (JP)
(74) Representative: Grünecker Patent- und Rechtsanwälte PartG mbB

(56) References cited:
- DE-A1- 102017 011 067
- JP-A- 2012 224 222
- JP-U- S52 136 576
- US-A1- 2010 156 621

## Description

The present teaching relates to a straddled vehicle according to the preamble of independent claim 1. Such a straddled vehicle can be taken from the prior art document JP 2012 224222 A.

Conventionally, straddled vehicles including a handlebar are known. The handlebar is provided with a handlebar switch. The handlebar switch is configured to allow a rider to manipulate the handlebar switch while holding a grip of the handlebar using a finger of a hand holding the grip. Thus, the rider can manipulate the handlebar switch while driving the straddled vehicle. Prior art document JP 2005-053452 A discloses a handlebar switch.

An object of the present invention is to provide a straddled vehicle that achieves an improvement in convenience of a handlebar switch configured to allow a rider to manipulate the handlebar switch while holding a grip of a handlebar using a finger of a hand holding the grip.

According to the present invention said object is solved by a straddled vehicle having the features of independent claim 1. Preferred embodiments are laid down in the dependent claims.

A rider manipulates a handlebar switch configured to allow a rider to manipulate the handlebar switch while holding a grip of a handlebar using a finger of a hand holding the grip. The rider of a straddled vehicle manipulates a handlebar switch such as described above while driving the straddled vehicle. It is therefore preferable to allow the rider to recognize manipulations of the handlebar switch without looking at the handlebar switch. Furthermore, only limited space is available for providing the handlebar switch in the vicinity of the grip of the handlebar. It is therefore preferable to set (assign) a plurality of functions to a single handlebar switch rather than providing handlebar switches for respective functions. Examples of possible configurations in which a plurality of functions are set (assigned) to a single handlebar switch include a configuration that allows for multiple stages of manipulations of a handlebar switch in the same direction. If the handlebar switch having such a configuration can give the rider manipulating the handlebar switch distinct manipulation sensations for the different manipulation stages, the rider can feel the execution of each manipulation of the handlebar switch without looking at the handlebar switch. Even if the rider driving the straddled vehicle is wearing gloves, such a configuration allows the rider to easily recognize each manipulation of the handlebar switch. Setting a load required for a second-stage manipulation to a larger value than a load required for a first-stage manipulation makes it possible to reduce the chance of a wrong manipulation, such as further performing the second-stage manipulation by mistake when performing the first-stage manipulation. That is, the above-described configuration can reduce the chance of a wrong manipulation while allowing the rider to easily recognize each manipulation of the handlebar switch. As a result, the convenience of the handlebar switch improves. The present teaching has been accomplished based on the findings described above.

According to aspects of the present teaching accomplished based on the findings described above, a straddled vehicle has the following configurations.
(1) A straddled vehicle according to an embodiment of the present teaching includes a handlebar switch configured to allow a rider to manipulate the handlebar switch while holding a grip of a handlebar using a finger of a hand holding the grip, wherein the handlebar switch is manipulable in a first direction by the rider using a finger, the handlebar switch returns to its initial position once the rider removes the finger therefrom, the handlebar switch allows for a first-stage manipulation that requires a first manipulation amount as an amount of manipulation from the initial position and a second-stage manipulation that requires a second manipulation amount greater than the first manipulation amount as an amount of manipulation from the initial position, a maximum manipulation load required to reach the first manipulation amount is a first maximum manipulation load, a maximum manipulation load required to reach the second manipulation amount is a second maximum manipulation load greater than the first maximum manipulation load, the rate of increase in the manipulation load changes in an increasing direction both when the first manipulation amount is exceeded and when the second manipulation amount is exceeded, and the rate of increase in the manipulation load changing in an increasing direction results in the rider perceiving a manipulation sensation both when the first-stage manipulation is performed and when the second-stage manipulation is performed.

In the straddled vehicle described in (1), the first-stage manipulation and the second-stage manipulation are performed in the same direction. However, the handlebar switch gives distinct manipulation sensations respectively for the first-stage manipulation and the second-stage manipulation. The manipulation amount and the manipulation load (second maximum manipulation load) required for the second-stage manipulation are greater than the manipulation amount and the manipulation load (first maximum manipulation load) required for the first-stage manipulation, making it possible to reduce the chance of a wrong manipulation, such as further performing the second-stage manipulation by mistake when performing the first-stage manipulation, while allowing the rider to easily recognize the difference between the first-stage manipulation and the second-stage manipulation. That is, according to the straddled vehicle described in (1), it is possible to reduce the chance of a wrong manipulation while allowing the rider to easily recognize each manipulation of the handlebar switch. As a result, the convenience of the handlebar switch can be improved.

According to an aspect of the present teaching, the straddled vehicle may adopt the following configuration.

(2) The straddled vehicle described in (1), wherein the first maximum manipulation load is greater than or equal to half of the second maximum manipulation load.

In the straddled vehicle described in (2), a certain level of manipulation load is required when the first-stage manipulation is performed. Specifically, in the straddled vehicle described in (2), the first maximum manipulation load, which is greater than or equal to half of the second maximum manipulation load, is required when the first-stage manipulation is performed. Because of this configuration, the straddled vehicle described in (2) allows the rider to sufficiently recognize the execution of the first-stage manipulation.

According to an aspect of the present teaching, the straddled vehicle may adopt the following configuration. (3) The straddled vehicle described in (1) or (2), wherein a first intermediate manipulation load is set as a trough of the manipulation load to be reached after the first maximum manipulation load is reached and before the second maximum manipulation load is reached, and a first load drop, which is a difference between the first maximum manipulation load and the first intermediate manipulation load, is greater than or equal to 1/4 of the first maximum manipulation load.

In the straddled vehicle described in (3), the first intermediate manipulation load is set as a trough of the manipulation load to be reached after the first maximum manipulation load is reached and before the second maximum manipulation load is reached. Furthermore, in the straddled vehicle described in (3), a drop (first load drop) accompanying the first-stage manipulation is greater than or equal to 1/4 of the first maximum manipulation load (drop of greater than or equal to 25%). Because of this configuration, the straddled vehicle described in (3) allows the rider to easily recognize the first-stage manipulation using the load difference (first load drop) between the first maximum manipulation load and the first intermediate manipulation load.

According to an aspect of the present teaching, the straddled vehicle may adopt the following configuration.

(4) The straddled vehicle described in any one of (1) to (3), wherein the first manipulation amount is greater than or equal to 1/3 and less than or equal to 2/3 of the second manipulation amount.

In the straddled vehicle described in (4), the first manipulation amount is greater than or equal to 1/3 and less than or equal to 2/3 of the second manipulation amount. In other words, in the straddled vehicle described in (4), a certain manipulation amount relative to the manipulation amount (second manipulation amount) for the second-stage manipulation is required for the rider to perform the first-stage manipulation, and a certain manipulation amount is required for the rider to perform the second-stage manipulation after the first-stage manipulation. Because of this configuration, the straddled vehicle described in (4) allows the rider to easily recognize and distinguish the first-stage manipulation and the second-stage manipulation from each other.

According to an aspect of the present teaching, the straddled vehicle may adopt the following configuration.

(5) The straddled vehicle described in any one of (1) to (4), wherein a second intermediate manipulation load is set as a trough of the manipulation load in a range corresponding to manipulation amounts greater than the manipulation amount corresponding to the second maximum manipulation load, and a second load drop, which is a difference between the second maximum manipulation load and the second intermediate manipulation load, is greater than or equal to 1/4 of the second maximum manipulation load.

In the straddled vehicle described in (5), the second intermediate manipulation load is set as a trough of the manipulation load to be reached when the handlebar switch is manipulated by a manipulation amount greater than the manipulation amount corresponding to the second maximum manipulation load. Furthermore, in the straddled vehicle described in (5), a drop (second load drop) accompanying the second-stage manipulation is greater than or equal to 1/4 of the second maximum manipulation load (drop of greater than or equal to 25%). Because of this configuration, the straddled vehicle described in (5) allows the rider to easily recognize the second-stage manipulation using the load difference (second load drop) between the second maximum manipulation load and the second intermediate manipulation load.

According to an aspect of the present teaching, the straddled vehicle may adopt the following configuration.

(6) The straddled vehicle described in any one of (1) to (5), wherein the handlebar switch is used to operate lighting equipment included in the straddled vehicle.

The straddled vehicle described in (6) makes it possible to implement a plurality of lighting patterns of the lighting equipment through manipulations of a single handlebar switch and to provide distinct manipulation sensations for different manipulation stages respectively corresponding to the lighting patterns. Because of this configuration, the straddled vehicle described in (6) allows the rider to easily recognize which lighting pattern the rider has performed a manipulation for without looking at the handlebar switch.

According to an aspect of the present teaching, the straddled vehicle may adopt the following configuration.

(7) The straddled vehicle described in (6), wherein the lighting equipment is direction indicators, and a flashing operation of the direction indicators corresponding to the first-stage manipulation is different from a flashing operation of the direction indicators corresponding to the second-stage manipulation.

The straddled vehicle described in (7) makes it possible to implement a plurality of flashing operations of the direction indicators through manipulations of a single handlebar switch. Furthermore, the straddled vehicle described in (7) gives the rider manipulating the handlebar switch distinct manipulation sensations for the different manipulation stages. Because of this configuration, the present teaching allows the rider to easily recognize which flashing operation the rider has performed a manipulation for without looking at the handlebar switch.

(8) The straddled vehicle described in any one of (1) to (7), wherein the handlebar switch is used to operate a device included in the straddled vehicle, and is configured so that performing the first-stage manipulation or the second-stage manipulation when the device is performing an operation corresponding to the first-stage manipulation or the second-stage manipulation cancels the currently performed operation of the device.

The straddled vehicle described in (8) makes it possible to cancel a currently performed operation of the device through a manipulation of the handlebar switch, eliminating the need to additionally provide a cancel switch for canceling operations of the device. This allows for greater flexibility in the configuration of the handlebar switch itself and the placement of the handlebar switch. As a result, the convenience of the handlebar switch improves.

(9) The straddled vehicle described in (6), wherein an operation of the lighting equipment corresponding to either the first-stage manipulation or the second-stage manipulation is to turn on the lighting equipment in accordance with driving conditions of the straddled vehicle.

The straddled vehicle described in (9) makes it possible to turn on the lighting equipment in accordance with driving conditions of the straddled vehicle through the first-stage manipulation or the second-stage manipulation. Thus, in a situation where there is another vehicle (specifically, a vehicle ahead and/or an oncoming vehicle) in front of the straddled vehicle, for example, the driver of such a vehicle can be prevented from being illuminated by light from the lighting equipment.

(10) The straddled vehicle described in (9), wherein the lighting equipment is a headlamp, the headlamp is configured to control light emission to a plurality of areas in front of the straddled vehicle, the plurality of areas including at least one upper area, the at least one upper area is partially or entirely located above a horizontal reference line when the straddled vehicle is in an upright position, and an operation of the headlamp corresponding to either the first-stage manipulation or the second-stage manipulation is to emit light to the at least one upper area in accordance with driving conditions of the straddled vehicle.

In the straddled vehicle described in (10), the first-stage manipulation or the second-stage manipulation causes an operation of the headlamp to emit light to the at least one upper area in accordance with the driving conditions of the straddled vehicle. Thus, in a situation where there is another vehicle (specifically, a vehicle ahead and/or an oncoming vehicle) in front of the straddled vehicle, for example, the driver of such a vehicle can be prevented from being illuminated by light from the headlamp.

The "straddled vehicle" refers to, for example, a vehicle including a saddle sheet. The straddled vehicle includes, for example, at least one front wheel and at least one rear wheel. That is, the straddled vehicle is not limited to a two-wheel vehicle, but may be a three-wheel vehicle in which the front wheel or the rear wheel includes a pair of left and right wheels, or may be a four-wheel vehicle in which the front wheel and the rear wheel each include a pair of left and right wheels. Examples of straddled vehicles include scooters, mopeds, snowmobiles, watercrafts, and ATVs (all-terrain vehicles). The straddled vehicle may be, for example, a leaning vehicle. The leaning vehicle refers to a vehicle having a leaning vehicle body that leans leftward when the vehicle turns left and leans rightward when the vehicle turns right. The straddled vehicle may include, for example, a supercharging device. The supercharging device may be, for example, a turbocharger or a supercharger. The straddled vehicle may be a hybrid vehicle including an engine and an electric motor as drive sources. That is, the straddled vehicle may have an electric motor as well as an engine as a drive source. The straddled vehicle may be an electric vehicle including an electric motor as a drive source.

The "handlebar switch" can be adopted as a switch for implementing functions of various devices included in the straddled vehicle. Examples of devices that can be operated through the handlebar switch include various types of lighting equipment. Examples of lighting equipment that can be operated through the handlebar switch include hazard lamps, headlamps, and direction indicators that perform flashing operations when the vehicle changes lanes and makes a left or right turn.

The handlebar switch is provided, for example, in a switch box attached to the handlebar. The switch box is located adjacent to a grip on the handlebar, for example. Thereby, the handlebar switch is configured to allow a rider to manipulate the handlebar switch while holding the grip on the handlebar using the finger of the hand holding the grip.

The handlebar switch includes, for example, a manipulation surface or a manipulation portion that the finger of the hand holding the grip contact when the rider is holding the grip on the handlebar. For example, the rider's finger is in contact with the same manipulation surface or manipulation portion in both the first-stage manipulation and the second-stage manipulation. The first-stage manipulation is, for example, a manipulation where the rider manipulates the handlebar switch in the first direction while holding the grip on the handlebar using the finger of the hand holding the grip, and the manipulation amount from the initial position of the handlebar switch is the first manipulation amount. The second-stage manipulation is, for example, a manipulation where the rider manipulates the handlebar switch in the first direction while holding the grip on the handlebar using the finger of the hand holding the grip, and the manipulation amount from the initial position of the handlebar switch is the second manipulation amount greater than the first manipulation amount. The manipulation surface or manipulation portion that the rider's finger is in contact with during the second-stage manipulation is, for example, the same manipulation surface or manipulation portion that the rider's finger is in contact with during the first-stage manipulation. The direction in which the rider manipulates the handlebar switch during the second-stage manipulation is, for example, the same direction in which the rider manipulates the handlebar switch during the first-stage manipulation. Said direction is, for example, the first direction. The handlebar switch is configured, for example, to allow the rider to manipulate the handlebar switch in the first direction while holding the grip on the handlebar using the finger of the hand holding the grip. The handlebar switch may be configured, for example, to allow the rider to manipulate the handlebar switch in a second direction while holding the grip on the handlebar using the finger of the hand holding the grip. The second direction is a different direction than the first direction. The second direction is, for example, opposite to the first direction.

The handlebar switch is configured to return to its initial position, for example, when the rider is manipulating the handlebar switch in the first direction while holding the grip on the handlebar using the finger of the hand holding the grip, by removing the finger from the handlebar switch. The direction in which the handlebar switch returns to its initial position from being manipulated in the first direction is the opposite of the first direction.

The handlebar switch is used, for example, to operate a device included in the straddled vehicle. The device includes, for example, a lighting equipment.

The operation of the device corresponding to the first-stage manipulation may, for example, start when the handlebar switch is manipulated to the first manipulation amount, or start while manipulating the handlebar switch from the manipulation amount corresponding to the first maximum manipulation load to the first manipulation amount, or start while manipulating the handlebar switch from the first manipulation amount to the manipulation amount corresponding to the second maximum manipulation load. The phrase "while manipulating the handlebar switch from the first manipulation amount to the manipulation amount corresponding to the second maximum manipulation load" includes, for example, "while manipulating the handlebar switch from the first manipulation amount to a manipulation amount greater than the first manipulation amount with the momentum of the first-stage manipulation. The manipulation amount corresponding to the first maximum manipulation load may be the first manipulation amount or a manipulation amount smaller than the first manipulation amount. The first manipulation amount may be, for example, a manipulation amount corresponding to the first intermediate manipulation load.

The operation of the device corresponding to the second-stage manipulation may, for example, start when the handlebar switch is manipulated to the second manipulation amount, or start while manipulating the handlebar switch from the manipulation amount corresponding to the second maximum manipulation load to the second manipulation amount, or start while manipulating the handlebar switch from the second manipulation amount to a manipulation amount greater than the second manipulation amount. The phrase "while manipulating the handlebar switch from the second manipulation amount to a manipulation amount greater than the second manipulation amount" includes, for example, "while manipulating the handlebar switch from the second manipulation amount to a manipulation amount greater than the second manipulation amount with the momentum of the second-stage manipulation. The manipulation amount corresponding to the second maximum manipulation load may be the second manipulation amount or a manipulation amount smaller than the second manipulation amount. The second manipulation amount may be, for example, a manipulation amount corresponding to the second intermediate manipulation load.

The handlebar switch is configured, for example, so that the manipulation load of the handlebar switch increases after the manipulation amount of the handlebar switch exceeds the first manipulation amount, compared to before the manipulation amount of the handlebar switch exceeds the first manipulation amount. The handlebar switch is configured, for example, so that the manipulation load of the handlebar switch increases with an increase in the manipulation amount of the handlebar switch after the manipulation amount of the handlebar switch exceeds the first manipulation amount. This allows the rider to recognize that the rider has performed the first-stage manipulation by the sensation transmitted to the finger in contact with the manipulation surface or manipulation portion of the handlebar switch when the first-stage manipulation is performed. The sensation is, for example, a sensation that the handlebar switch has become heavier due to the increased manipulation load.

The handlebar switch may, for example, be configured so that after the manipulation amount of the handlebar switch reaches the manipulation amount corresponding to the first maximum manipulation load, the manipulation load of the handlebar switch remains the same or almost the same as that first maximum manipulation load, or is smaller than that first maximum manipulation load. This allows the rider to recognize that the rider has performed the first-stage manipulation by the sensation transmitted to the finger in contact with the manipulation surface or manipulation portion of the handlebar switch when the first-stage manipulation is performed. The sensation is, for example, a sensation that the handlebar switch has become lighter as the manipulation load remains the same or almost the same as that first maximum manipulation load, or is smaller than that first maximum manipulation load.

The handlebar switch is configured, for example, so that the manipulation load of the handlebar switch increases after the manipulation amount of the handlebar switch exceeds the second manipulation amount, compared to before the manipulation amount of the handlebar switch exceeds the second manipulation amount. The handlebar switch is configured, for example, so that the manipulation load of the handlebar switch increases with an increase in the manipulation amount of the handlebar switch after the manipulation amount of the handlebar switch exceeds the second manipulation amount. This allows the rider to recognize that the rider has performed the second-stage manipulation by the sensation transmitted to the finger in contact with the manipulation surface or manipulation portion of the handlebar switch when the second-stage manipulation is performed. The sensation is, for example, a sensation that the handlebar switch has become heavier due to the increased manipulation load.

The handlebar switch may, for example, be configured so that after the manipulation amount of the handlebar switch reaches the manipulation amount corresponding to the second maximum manipulation load, the manipulation load of the handlebar switch remains the same or almost the same as that second maximum manipulation load, or is smaller than that second maximum manipulation load. This allows the rider to recognize that the rider has performed the second-stage manipulation by the sensation transmitted to the finger in contact with the manipulation surface or manipulation portion of the handlebar switch when the second-stage manipulation is performed. The sensation is, for example, a sensation that the handlebar switch has become lighter as the manipulation load remains the same or almost the same as that second maximum manipulation load, or is smaller than that second maximum manipulation load.

Each of the first and second manipulation amounts corresponds to a change point of the manipulation load in the relationship between the manipulation load and the manipulation amount while the rider manipulates the handlebar switch, for example. This relationship can be shown, for example, by a graph. The change point of the manipulation load is, for example, a point where the manipulation load changes from a state where the manipulation load decreases with an increase in the manipulation amount to a state where the manipulation load increases with an increase in the manipulation amount. The change point of the manipulation load is, for example, a point where the manipulation load changes from a state where the manipulation load remains constant or almost constant even if the manipulation amount increases to a state where the manipulation load increases with an increase in the manipulation amount. The change point of the manipulation load is, for example, a point where the rate of increase in the manipulation load changes to become larger.

Each of the first maximum manipulation load and the second maximum manipulation load corresponds to a peak of the manipulation load in the relationship between the manipulation load and the manipulation amount while the rider manipulates the handlebar switch, for example. This relationship can be shown, for example, by a graph. At least one of the first maximum manipulation load and the second maximum manipulation load may, for example, remain a constant or almost constant manipulation load even when the manipulation amount increases.

The "lighting equipment" encompasses devices that emit light in a manner that is recognizable to people in the vicinity in accordance with the rider's manipulation and devices that emit light in a lighting pattern that indicates the rider's intention in accordance with the rider's manipulation. Examples of devices that emit light in a manner that is recognizable to people in the vicinity in accordance with the rider's manipulation include headlamps capable of toggling between a high beam and a low beam in accordance with the rider's manipulation. Examples of devices that emit light in a lighting pattern that indicates the rider's intention in accordance with the rider's manipulation include direction indicators and hazard lamps.

The direction indicators can indicate the rider's intention to turn right or to change lanes to a right lane to people in the vicinity (for example, drivers of other vehicles) by flashing right indicator lamps in accordance with the rider's manipulation. The direction indicators can indicate the rider's intention to turn left or to change lanes to a left lane to people in the vicinity (for example, drivers of other vehicles) by flashing left indicator lamps in accordance with the rider's manipulation.

Examples of "functions of various devices included in the straddled vehicle" include flashing operations of the left indicator lamps and flashing operations of the right indicator lamps of the direction indicators. In a case where the handlebar switch of the straddled vehicle according to the present teaching is applied to a flasher switch, for example, the first-stage manipulation of the flasher switch (handlebar switch) can cause the direction indicators to perform a first operation (for example, an operation of the direction indicators for flashing a predetermined number of times), and the second-stage manipulation of the flasher switch (handlebar switch) can cause the direction indicators to perform a second operation (for example, an operation of the direction indicators for flashing continuously).

"To cancel a currently performed operation of the device" means to terminate the currently performed operation of the device. To explain using a case where the handlebar switch of the straddled vehicle according to the present teaching is applied to a flasher switch, "to cancel" a flashing operation of the direction indicators being performed (an operation for flashing a predetermined number of times or an operation for flashing continuously), for example, means to terminate the anticipated flashing operation. To explain using a specific example, "to cancel an operation for flashing continuously while the operation is performed" means to immediately terminate the currently performed flashing operation. "To cancel an operation for flashing a predetermined number of times" means to terminate the operation before the anticipated number of flashes are completed (to terminate the flashing operation even in the intermediate of the flashing operation).

"To cancel a currently performed operation" does not depend on whether or not another operation is started after the cancellation of the currently performed operation. That is, "to cancel a currently performed operation" encompasses both a case where the currently performed operation is canceled and no other operation is performed (case where the currently performed operation is canceled and the initial state is restored) and a case where the currently performed operation is canceled and the same operation or another operation is started (case where the currently performed operation is canceled and another operation is started).

In a case where the handlebar switch according to the present teaching is applied to a flasher switch, and the "operation of the direction indicators for flashing a predetermined number of times" is set as an operation corresponding to the first-stage manipulation of the flasher switch and the "operation of the direction indicators for flashing continuously" is set as an operation corresponding to the second-stage manipulation of the flasher switch, the flash rate of the direction indicators preferably remains unchanged before and after a manipulation. That is, in a case where a currently performed operation for flashing a predetermined number of times is canceled, and then the operation for flashing a predetermined number of times is started again, for example, the flashing operations are desirably performed using a constant rate throughout the preceding and following flashing operations.

The straddled vehicle according to the present teaching may be configured so that performing the first-stage manipulation or the second-stage manipulation of the handlebar switch cancels a currently performed flashing operation of the direction indicators. For example, the straddled vehicle may be configured so that performing, when an operation of the direction indicators for flashing a predetermined number of times (for example, a three-time flashing operation of the left indicator lamps) is performed, the first-stage manipulation or the second-stage manipulation of the flasher switch in the same direction or a different direction cancels the currently performed flashing operation of the direction indicators (for example, the three-time flashing operation of the left indicator lamps). For another example, the straddled vehicle may be configured so that performing, when an operation of the direction indicators for flashing continuously (for example, continuous flashing of the left indicator lamps) is performed, the first-stage manipulation or the second-stage manipulation of the flasher switch in the same direction or a different direction cancels the currently performed flashing operation of the direction indicators (for example, the continuous flashing of the left indicator lamps).

Various configurations may be adopted in terms of the "direction of movement of the handlebar switch (first direction)". For example, a rocker switch that pivots about an axis, i.e., a pivot axis, extending in a predetermined direction (for example, in an up-down direction of the vehicle or in a direction at an angle to the up-and-down direction) may be adopted as the handlebar switch. For another example, a slide switch that is slidable in a predetermined direction (for example, in an axial direction of the grip or in the up-down direction) may be adopted as the handlebar switch. Alternatively, the handlebar switch may have a lever shape. That is, a lever switch may be adopted, so that the handlebar switch is moved in a tilting manner. Alternatively, a push switch that is moved by being pushed down may be adopted as the handlebar switch. In a configuration in which a rocker switch is adopted as the handlebar switch, the handlebar switch may have a single pivot axis, or two or more pivot axes.

The "manipulation sensation" refers to a sensation that the rider perceives as a tactile response during a manipulation of the handlebar switch. Specifically, the rider of the straddled vehicle according to the present teaching perceives a "manipulation sensation" during a manipulation of the handlebar switch as a tactile response (clicking sensation) resulting from a drop from a maximum manipulation load to an intermediate manipulation load, or as a sensation (tactile response) as if the handlebar switch has hit a wall or as a sensation (tactile response) as if the handlebar switch has suddenly become heavier resulting from the rate of increase in the manipulation load changing in an increasing direction when the first manipulation amount or the second manipulation amount is exceeded.

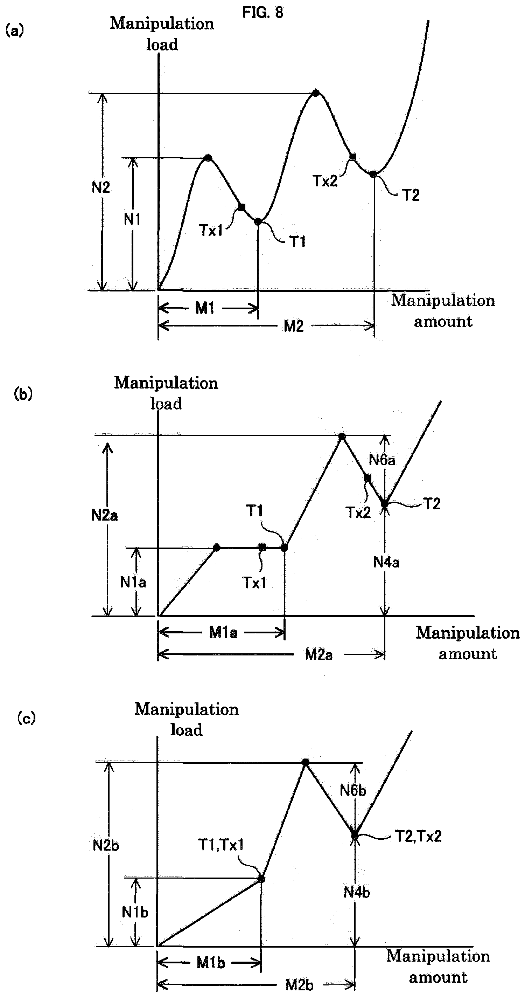

For example, in a configuration in which an intermediate manipulation load is set (see FIG. 8(a)), the rider perceives a sensation as if the handlebar switch has suddenly become lighter (sensation resulting from a drop from the maximum manipulation load to the intermediate manipulation load) when a peak manipulation load (first or second maximum manipulation load) is exceeded (when the rate of increase in the manipulation load changes in a negative direction). That is, in a configuration in which an intermediate manipulation load is set, the rider perceives, as a manipulation sensation, a clicking sensation resulting from a drop from the maximum manipulation load to the intermediate manipulation load.

For another example, in a configuration in which the intermediate manipulation load is not set and the first-stage manipulation requires a predetermined manipulation amount using the maximum manipulation load (in a configuration in which part of the first-stage manipulation involves maintaining the first maximum manipulation load (see FIG. 8(b)), the rider perceives a sensation as if the handlebar switch has suddenly become lighter when the manipulation load becomes substantially constant after going through a situation where the rate of increase in the manipulation load changes in an increasing direction. If the rider continues to manipulate the handlebar switch, the rider perceives a manipulation sensation as a tactile response as if the handlebar switch has become heavier again when the handlebar switch that became lighter to the touch once becomes heavier again (when the rate of increase in the manipulation load changes in a positive direction).

For another example, in a configuration in which the first-stage manipulation does not involve a change in the manipulation load (in a configuration in which the manipulation load during the first-stage manipulation follows a course without a bend; see FIG. 8(c)), the rider perceives a manipulation sensation as if the handlebar switch has become even heavier when the rate of increase in the manipulation load further changes in an increasing direction after going through a situation where the manipulation load increases.

"Switch toggling" means toggling the operating state of a device (for example, direction indicators) through manipulations of the handlebar switch. For example, the switch toggling encompasses toggling from an initial state in which the device is not performing an operation to a state in which the device is performing an operation (toggling from a switch off state to a switch on state), toggling from the state in which the device is performing an operation to the initial state (toggling from the switch on state to the switch off state), and toggling from the current operation to another operation (toggling from one on state to another on state).

As described above, "switch toggling" encompasses toggling from the switch off state to a switch on state, toggling from the switch on state to the switch off state, and toggling from one of switch on states to another. The switch on states include a plurality of states. In a case where the handlebar switch of the straddled vehicle according to the present teaching is applied to a flasher switch, the "switch on states" include flashing states of the direction indicators in a plurality of patterns. For example, in a case where the handlebar switch of the straddled vehicle according to the present teaching is applied to a flasher switch, the "switch on states" include a "state in which right indicators are caused to flash a predetermined number of times", a "state in which the right indicators are caused to flash continuously", a "state in which left indicators are caused to flash a predetermined number of times", and a "state in which the left indicators are caused to flash continuously".

"Toggling from one of switch on states to another" means toggling from one on state to another on state. To explain by way of example, "toggling from one of switch on states to another" means toggling from the "state in which the right indicators are caused to flash a predetermined number of times" to the "state in which the right indicators are caused to flash continuously".

Switch toggling timings in the straddled vehicle according to the present teaching can be selected from among various timings. For example, in the straddled vehicle according to the present teaching, switch toggling related to the first-stage manipulation may be set to occur at a timing before the first manipulation amount is reached or at a timing after the first manipulation amount is reached. For example, in the straddled vehicle according to the present teaching, the switch toggling related to the first-stage manipulation may be set to occur at a timing when the handlebar switch is manipulated by a manipulation amount of greater than or equal to 1/2 of the first manipulation amount and less than or equal to the first manipulation amount (timing before the first manipulation amount is reached). Alternatively, the switch toggling related to the first-stage manipulation may be set to occur at a timing after the first manipulation amount is reached and before the second maximum manipulation load is reached (timing after the first manipulation amount is reached). For example, in a configuration of the straddled vehicle according to the present teaching in which the first intermediate manipulation load is reached through a manipulation by the first manipulation amount, switch toggling may be set to occur at a timing after a manipulation amount of greater than or equal to 1/2 of the first manipulation amount is reached and before the first intermediate manipulation load is reached (see timing Tx1 in FIGS. 8(a) and (b)). For another example, in a configuration of the straddled vehicle according to the present teaching in which the manipulation amount for the first maximum manipulation load to be reached is smaller than the first manipulation amount (when the first maximum manipulation load is reached ≠ when the first manipulation amount is reached), switch toggling may be set to occur at a timing after the first maximum manipulation load is reached and before the first manipulation amount is reached (see timing Tx1 in FIG. 8(a)).

In the straddled vehicle according to the present teaching, the switch toggling related to the first-stage manipulation may be set to occur after the first maximum manipulation load is reached and before the first intermediate manipulation load is reached in the first-stage manipulation (see timing Tx1 in FIG. 8(a)). For another example, in the straddled vehicle according to the present teaching, switch toggling related to the second-stage manipulation may be set to occur after the second maximum manipulation load is reached and before the second intermediate manipulation load is reached in the second-stage manipulation (see timing Tx2 in FIG. 8(a)).

It should be noted that in the straddled vehicle according to the present teaching, switch toggling may be set to occur when a manipulation amount corresponding to the intermediate manipulation load in each stage of manipulation is reached. Furthermore, switch toggling may be set to occur at a timing when the manipulation shifts from each stage of manipulation to the next stage of manipulation. For example, the switch toggling related to the first-stage manipulation may be set to occur at a timing when the manipulation shifts from the first-stage manipulation to the second-stage manipulation. For another example, the switch toggling related to the second-stage manipulation may be set to occur when the second manipulation amount is reached. That is, the straddled vehicle according to the present teaching may have a configuration in which switch toggling is set to occur at a timing when the first manipulation amount is reached and at a timing when the second manipulation amount is reached (see timings T1, T2 in FIGS. 8(a) to (c)).

Furthermore, in a configuration of the straddled vehicle according to the present teaching in which the first intermediate manipulation load is not set for the handlebar switch, switch toggling may be set to occur at a timing after the first maximum manipulation load is reached and before the first manipulation amount is reached (see timing Tx1 in FIG. 8(b)).

The following describes switch toggling in more detail using a specific example in which the handlebar switch according to the present teaching has a cancel function and is applied to a flasher switch. The following specific example is based on the assumption that the first-stage manipulation of the flasher switch (handlebar switch) is set to cause the direction indicators to flash a predetermined number of times (first flashing operation) and the second-stage manipulation is set to cause the direction indicators to flash continuously (second flashing operation). Furthermore, the following specific example is based on the assumption that performing the first-stage manipulation or the second-stage manipulation during the execution of the second flashing operation is set to cancel the second flashing operation. A switch on state related to the first flashing operation (operation of the direction indicators for flashing a predetermined number of times) may be referred to and described as "first flashing operation ON", and a switch on state related to the second flashing operation (operation of the direction indicators for flashing continuously) as "second flashing operation ON".

In the example described above, performing the first-stage manipulation when the flasher switch is in the initial state (switch OFF state) causes switch toggling from the switch OFF state to the first flashing operation ON state. Furthermore, performing the second-stage manipulation during the execution of the first flashing operation causes switch toggling from the first flashing operation ON state to the second flashing operation ON state. Furthermore, performing the first-stage manipulation or the second-stage manipulation during the execution of the second flashing operation causes switch toggling from the second flashing operation ON state to the switch OFF state (cancels the flashing operation).

The "maximum manipulation load" means, for example, a maximum manipulation load in each stage of manipulation (the first-stage manipulation or the second-stage manipulation). That is, the "maximum manipulation load" encompasses a case where the manipulation load is maintained after the maximum manipulation load is reached (case where a predetermined manipulation amount is required with the maximum manipulation load maintained) and a case where the manipulation load reaches its maximum when the first manipulation amount is reached, as well as a case where the manipulation load decreases after the maximum manipulation load is reached (case where an intermediate manipulation load is set) in each stage of manipulation.

According to the present teaching, the "intermediate manipulation load" may be, for example, less than or equal to 3/4 of the maximum manipulation load in each stage of manipulation. That is, the "load difference" calculated by subtracting the intermediate manipulation load from the maximum manipulation load may be greater than or equal to 1/4 of the maximum manipulation load (load drop of greater than or equal to 25%). Alternatively, the "load difference" may be, for example, greater than or equal to half of the maximum manipulation load in each stage of manipulation. This configuration allows the rider to feel a drop in the manipulation load (clicking sensation) more easily.

The "first intermediate manipulation load being set as a trough of the manipulation load to be reached after the first maximum manipulation load is reached and before the second maximum manipulation load is reached" means that, for example, the first intermediate manipulation load is the lowest manipulation load in a range corresponding to manipulation amounts between the manipulation amount corresponding to the first maximum manipulation load and the manipulation amount corresponding to the second maximum manipulation load.

The "second intermediate manipulation load being set as a trough of the manipulation load in a range corresponding to manipulation amounts greater than the manipulation amount corresponding to the second maximum manipulation load" means that, for example, the second intermediate manipulation load is the lowest manipulation load in a range corresponding to manipulation amounts greater than the manipulation amount corresponding to the second maximum manipulation load. It should be noted that the straddled vehicle according to the present teaching may have a configuration in which the second intermediate manipulation load is not set for the handlebar switch.

Preferably, the "first manipulation amount" is a manipulation amount (displacement amount) that is enough for the rider to recognize the execution of the first-stage manipulation and that is within a range manageable for the rider to manipulate the handlebar switch with his/her finger. Preferably, the "second manipulation amount" is a manipulation amount (displacement amount) that is greater than the first manipulation amount, that is within a range manageable for the rider to manipulate the handlebar switch with his/her finger, and that is enough for the rider to recognize the execution of the second-stage manipulation.

The handlebar switch of the straddled vehicle according to the present teaching may be used, for example, to toggle between light emission modes of a headlamp as the lighting equipment.

The headlamp is, for example, configured to emit light to a plurality of areas in front of the vehicle. The plurality of areas includes at least one upper area. The at least one upper area is partially or entirely located above a horizontal reference line when the straddled vehicle is in an upright position. The headlamp is, for example, an adaptive headlamp configured to control light emission to the at least one upper area. The headlamp includes, for example, a main headlamp. The main headlamp is, for example, configured to emit at least a low beam. The main headlamp may be, for example, configured to emit a high beam besides a low beam. That is, the main headlamp may be configured to emit light to the at least one upper area. The main headlamp may or may not emit a low beam when emitting a high beam. The main headlamp may control the light emission to reduce or turn off the high beam when there is another vehicle (specifically, a vehicle ahead and/or an oncoming vehicle) in front of the straddled vehicle. The headlamp may include, for example, a sub-headlamp in addition to the main headlamp. The sub-headlamp is, for example, configured to emit light when the vehicle makes a turn. The sub-headlamp may be configured to emit light to at least one upper area. The sub-headlamp may be configured to emit light to the at least one upper area when the vehicle makes a turn. The sub-headlamp may be configured to emit light to the at least one upper area not only when the vehicle makes a turn but also when the vehicle is in an upright position. To "control light emission to the at least one upper area" encompasses, for example, to "control the brightness of light to the at least one upper area". To "control light emission to the at least one upper area" encompasses, for example, to "cause the sub-headlamp to emit light when the main headlamp is emitting light".

The areas refer to, for example, regions to which light is emitted from a light source provided in the headlamp. The headlamp is stationary type, which means it is configured to maintain physical light distribution settings of the headlamp. The plurality of areas is set so that their relative positions to each other are fixed.

The at least one upper area may be a single upper area. The single upper area may be an area to which a high beam is emitted. The at least one upper area may include an area to which a high beam is emitted. The at least one upper area may include, for example, at least one upper left area and at least one upper right area. The at least one upper left area may be, for example, a plurality of upper left areas located at different heights in the up-down direction from each other when the vehicle is in an upright position. The upper left area may be set so that the entirety of the upper left area is included in a left space, or so that more than half of the upper left area is included in the left space. The left space is, for example, a space to the left of the center of the vehicle in a left-right direction. It should be noted that the description of the at least one upper left area applies to the at least one upper right area, and thus the description of the at least one upper right area is omitted.

The horizontal reference line is, for example, a straight line obtained by extending, in both the leftward and rightward directions of the vehicle, a boundary line that is formed along an upper end of a predetermined area with the vehicle in an upright position and that extends in the left-right direction of the vehicle. The predetermined area is, for example, an area to which the low beam is emitted. The horizontal reference line is, for example, a cut-off line.

In a case where the handlebar switch of the straddled vehicle according to the present teaching is used to toggle between light emission modes of a headlamp such as described above, for example, the handlebar switch can be manipulated as described below to toggle between the light emission modes of the headlamp.

Performing the first-stage manipulation in the first direction causes the headlamp to emit a high beam.

Performing the second-stage manipulation in the first direction causes the headlamp to perform adaptive light emission. The adaptive light emission refers to, for example, light emission involving reducing the brightness of light to an area where there is another vehicle (specifically, a vehicle ahead and/or an oncoming vehicle) among the plurality of areas in front of the vehicle. Reducing the brightness of light to an area encompasses, for example, turning off a light source corresponding to this area or turning on the light source into a reduced light state. It should be noted that performing the first-stage manipulation in the first direction may cause the headlamp to perform the adaptive light emission. In this case, performing the second-stage manipulation in the first direction may cause the headlamp to emit a high beam. Alternatively, the headlamp may perform automatic high/low beam emission instead of the adaptive light emission. The automatic high/low beam emission refers to, for example, light emission involving changing the light emission mode from a high beam mode to a low beam mode if there is another vehicle (specifically, a vehicle ahead and/or an oncoming vehicle) in front of the straddled vehicle when a high beam is emitted.

Performing the first-stage manipulation in a second direction causes the headlamp to emit a low beam.

Performing the second-stage manipulation in the second direction causes the headlamp to perform high beam flashing. The high beam flashing is, for example, temporarily changing light being emitted from a low beam to a high beam.

To "turn on the lighting equipment in accordance with driving conditions of the straddled vehicle" means that, for example, the rider performing the first-stage manipulation or the second-stage manipulation causes an operation of the lighting equipment corresponding to the manipulation (i.e., turning on the lighting equipment) to be automatically performed in accordance with the driving conditions of the straddled vehicle. The lighting equipment may be a headlamp. The headlamp may perform, for example, the adaptive light emission. The headlamp may perform, for example, the automatic high/low beam emission. The headlamp may include, for example, a sub-headlamp that functions as a cornering lamp. The lighting equipment may be, for example, used for road surface drawing. The road surface drawing may indicate, for example, the presence of the straddled vehicle or the traveling direction of the straddled vehicle. The lighting equipment that is used for the road surface drawing includes, for example, a laser light source. The road surface drawing is performed using, for example, laser light.

To "emit light to the at least one upper area in accordance with driving conditions of the straddled vehicle" means that, for example, the rider performing the first-stage manipulation or the second-stage manipulation causes an operation of the headlamp corresponding to the manipulation (i.e., emitting light to the at least one upper area) to be automatically performed in accordance with the driving conditions of the straddled vehicle.

It should be noted that the straddled vehicle according to the present teaching may be capable of displaying, when a manipulation of the handlebar switch is performed, a visual representation (image) corresponding to the manipulation on a display device (meter) of the straddled vehicle or on a predetermined device (for example, a smartphone) owned by the rider. For example, the straddled vehicle according to the present teaching may be configured to show a change in the screen of the rider's smartphone fixed to the handlebar or the like when the rider manipulates the handlebar switch.

### Advantageous Effects of Invention

According to the present teaching, it is possible to provide a straddled vehicle that achieves an improvement in convenience of a handlebar switch configured to allow a rider to manipulate the handlebar switch while holding a grip of a handlebar using a finger of a hand holding the grip.

### Brief Description of Drawings

[FIG. 1] FIG. 1 is a diagram including a left side view of a straddled vehicle according to an embodiment of the present teaching, a diagram illustrating a left grip and a left switch box of the straddled vehicle, a schematic illustration of manipulations of a flasher switch, and a graph showing the relationship between manipulation load and manipulation amount during manipulations of the flasher switch.
[FIG. 2] FIG. 2(a-1) is a diagram illustrating the flasher switch in FIG. 1. FIG. 2(a-2) is a cross-sectional view taken along line A1-A1' in FIG. 2(a-1). FIG. 2(b) is a diagram showing manipulations of the flasher switch and flashing patterns of direction indicators corresponding to the respective manipulations.
[FIG. 3] FIG. 3(a) is a diagram illustrating the left switch box and the left grip of the straddled vehicle in FIG. 1. FIG. 3(b) is a left side view of the left switch box. FIG. 3(c) is a cross-sectional view taken along line A2-A2' in FIG. 3(b).
[FIG. 4] FIG. 4 is a left side view illustrating the left switch box and a shift operation part of the straddled vehicle in FIG. 1.
[FIG. 5] FIG. 5 is a diagram illustrating a cover and a right switch box of the straddled vehicle in FIG. 1.
[FIG. 6] FIG. 6 is a diagram illustrating an attachment structure for the switch box and a handlebar of the straddled vehicle in FIG. 1.
[FIG. 7] FIG. 7 is a reference diagram illustrating a conventional attachment structure for a switch box and a handlebar.
[FIG. 8] FIG. 8 is a diagram including a graph showing the relationship between manipulation load, manipulation amount, and switch toggling timing in the flasher switch of the straddled vehicle in FIG. 1, and graphs showing examples of other configurations of the flasher switch of the straddled vehicle in FIG. 1.
[FIG. 9] FIG. 9 is a reference diagram showing the relationship between manipulation load and manipulation amount of a flasher switch.

### Description of Embodiments

The following describes a straddled vehicle 1 according to an embodiment of the present teaching in detail with reference to the drawings. It should be noted that the embodiment described below is merely an example. The present teaching should never be construed in a limited way based on the embodiment described below.

A front-back direction of the straddled vehicle 1 herein is defined as a "front-back direction Y". The forward direction of the front-back direction Y is defined as a "forward direction Fr". The backward direction of the front-back direction Y is defined as a "backward direction Rr". A left-right direction of the straddled vehicle 1 (width direction of the vehicle) is defined as a "left-right direction X". The leftward direction of the left-right direction X is defined as a "leftward direction L". The rightward direction of the left-right direction X is defined as a "rightward direction R". An up-down direction of the straddled vehicle 1 is defined as an "up-down direction H". The upward direction of the up-down direction H is defined as an "upward direction Up". The downward direction of the up-down direction H is defined as a "downward direction Lw". It should be noted that the forward, backward, upward, downward, leftward, and rightward directions of the straddled vehicle 1 are the forward, backward, upward, downward, leftward, and rightward directions as viewed from a rider seated on a seat 4 of the straddled vehicle 1.

When referring to axes and members extending in the left-right direction X herein, it does not necessarily mean that the axes and members are strictly parallel to the left-right direction X. Axes and members extending in the left-right direction X encompass axes and members that are inclined within the range of ±45° relative to the left-right direction X.

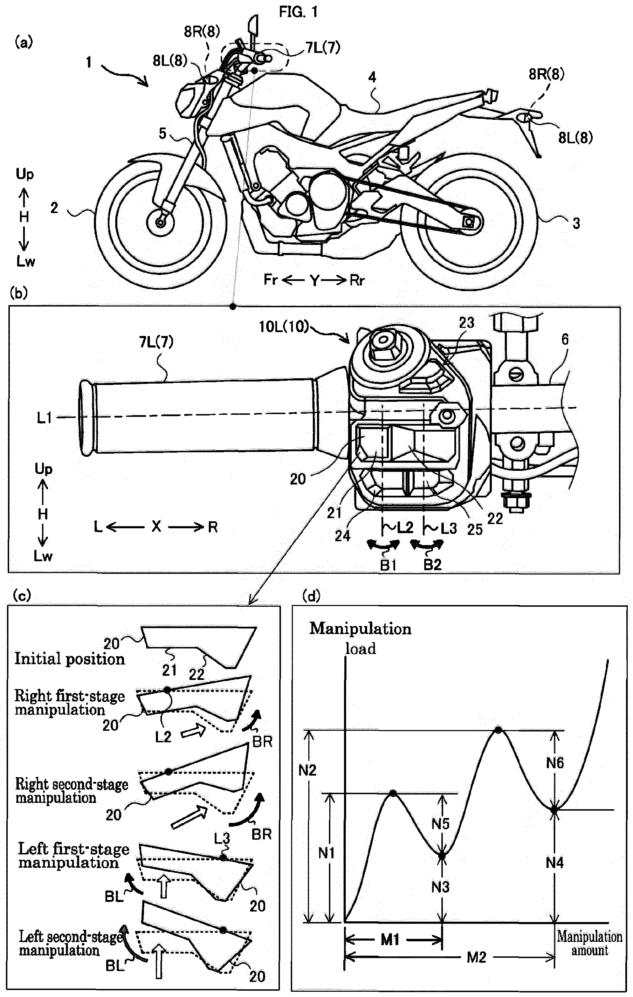

FIG. 1(a) is a left side view of the straddled vehicle 1 according to an embodiment of the present teaching. As shown in FIG. 1, the straddled vehicle 1 includes a front wheel 2, a rear wheel 3, a front fork 5, a handlebar 6, switch boxes 10, and direction indicators 8. The straddled vehicle 1 also includes a transmission, not shown, and a shift assist device (shift actuator, for example) that assists in a shift operation to change gear stages of the transmission.

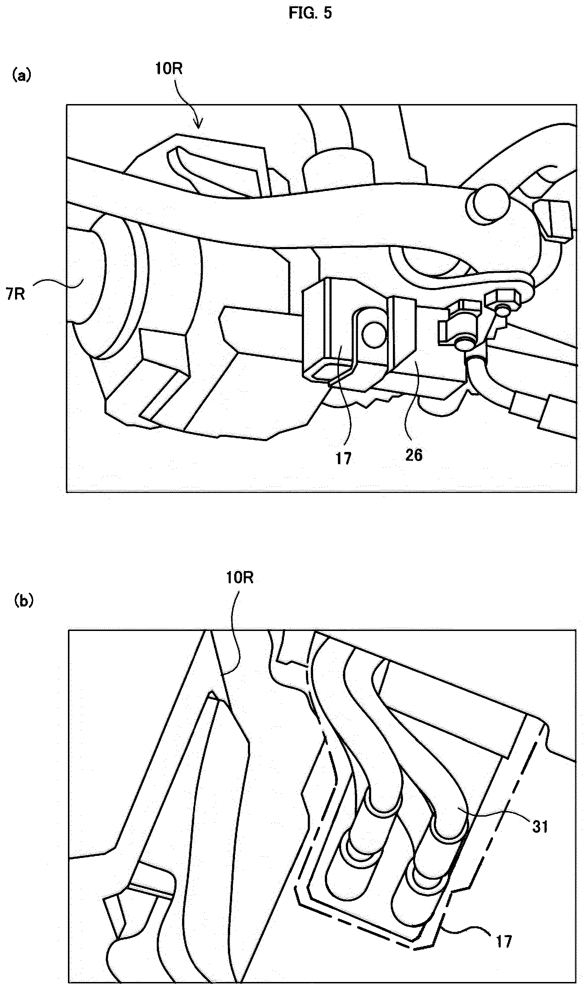

As shown in FIG. 1(a), the front fork 5 is attached to the front wheel 2. The handlebar 6 is attached to an end portion of the front fork 5 in the upward direction Up. The handlebar 6 extends in the left-right direction X. Grips 7 are respectively attached to opposite ends of the handlebar 6 in the left-right direction X. More specifically, as shown in FIG. 1(b), a left grip 7L is attached to an end portion of the handlebar 6 in the leftward direction L. A right grip 7R (see FIG. 5(a)) is attached to an end portion of the handlebar 6 in the rightward direction R.

The straddled vehicle 1 is provided with two switch boxes 10. Specifically, the straddled vehicle 1 is provided with a left switch box 10L (see FIG. 1(b)) located in the vicinity of the left grip 7L and a right switch box 10R (see FIG. 5(a)) located in the vicinity of the right grip 7R.

The direction indicators 8 perform flashing operations in predetermined flashing patterns in accordance with the rider's manipulation of a flasher switch 20 when the rider intends to make a left or right turn or change lanes. The straddled vehicle 1 has four direction indicators 8. Specifically, as shown in FIG. 1(a), the straddled vehicle 1 has a left indicator lamp 8L in each of the frontward and backward directions Fr and Rr as direction indicators 8. The straddled vehicle 1 also has a right indicator lamp 8R in the frontward direction Fr in a position hidden behind the left indicator lamp 8L in the forward direction Fr in FIG. 1(a) and a right indicator lamp 8R in the backward direction Rr in a position hidden behind the left indicator lamp 8L in the backward direction Rr in FIG. 1(a).

In the following description, the left indicator lamp 8L in the forward direction Fr and the left indicator lamp 8L in the backward direction Rr are referred to and described collectively and simply as "left indicator lamps 8L". Likewise, the right indicator lamp 8R in the forward direction Fr and the right indicator lamp 8R in the backward direction Rr are referred to and described collectively and simply as "right indicator lamps 8R".

Each switch box 10 includes various switches that are used to operate devices included in the straddled vehicle 1. For example, as shown in FIG. 1(b), the left switch box 10L includes the flasher switch 20 to be used to cause the direction indicators 8 (lighting equipment) of the straddled vehicle 1 to flash when the rider intends to change lanes or make a left or right turn.

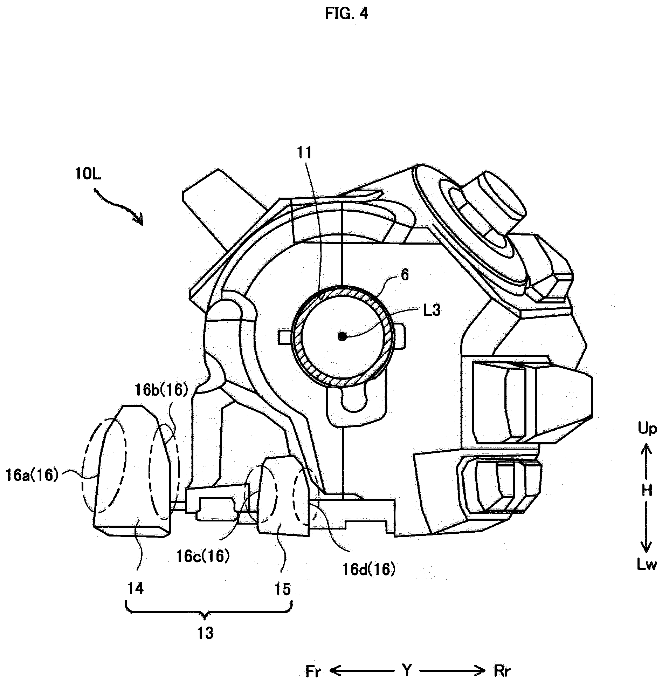

The left switch box 10L also includes, as shown in FIG. 1(b), a meter operation switch 23 to be used to select and decide on a visual representation or an image displayed on a meter panel (not shown) of the straddled vehicle 1, a horn switch 24 for sounding a horn, and a hazard switch 25 for turning on hazard lamps (lighting equipment). The left switch box 10L further includes a shift operation part 13 (see FIG. 4) for performing the shift operation of the transmission and a dimmer switch (not shown) for toggling between upward and downward orientations of a headlamp.

### <Configuration of Flasher Switch>

Referring to FIG. 1, the following describes a configuration of the flasher switch 20 (handlebar switch). FIG. 1 is a diagram including a left side view of the straddled vehicle 1 including the flasher switch 20, a plan view of the left switch box 10L of the straddled vehicle 1, a schematic illustration of manipulations of the flasher switch 20, and a graph showing manipulation load during manipulations of the flasher switch 20.

The flasher switch 20 is configured to allow the rider to manipulate the flasher switch 20 while holding the left grip 7L using a finger of a hand holding the left grip 7L (finger of the left hand). As shown in FIG. 1(b), the flasher switch 20 has a right manipulation part 22 and a left manipulation part 21. In the straddled vehicle 1, performing a manipulation of pressing down on the right manipulation part 22 causes the right indicator lamps 8R to flash, and performing a manipulation of pressing down on the left manipulation part 21 causes the left indicator lamps 8L to flash. Manipulations of the flasher switch 20 and flashing operations of the direction indicators 8 corresponding to the respective manipulations will be described below.

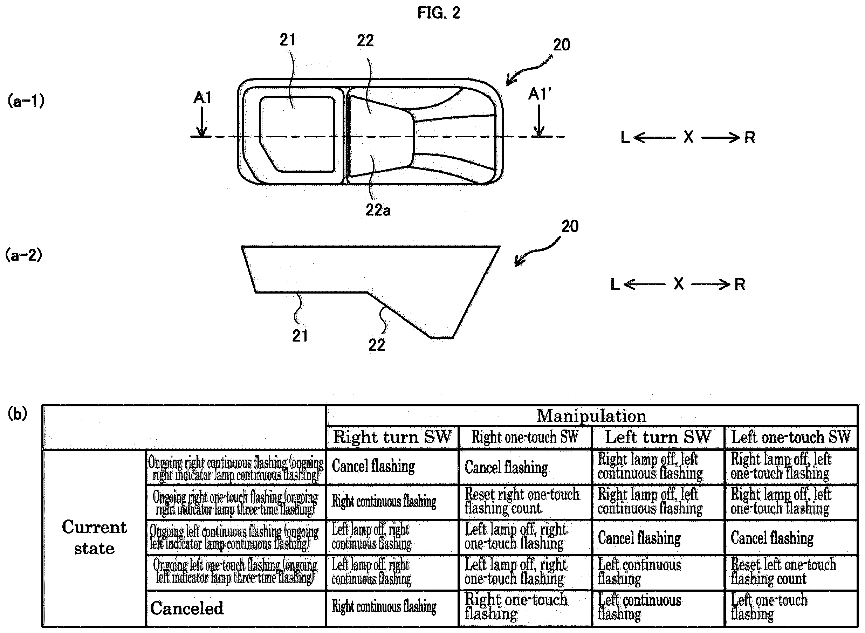

As shown in FIG. 2(a-1) and (a-2), the right manipulation part 22 of the flasher switch 20 has an inclined surface 22a that can be manipulated by the rider so that the right manipulation part 22 is pressed toward the center (in the rightward direction R) of the straddled vehicle 1 in the left-right direction X. The inclined surface 22a of the right manipulation part 22 is a finger contact surface that receives contact of a finger of the rider. This configuration facilitates the rider's manipulations of the right manipulation part 22 in the straddled vehicle 1.

As shown in FIG. 1(b), the flasher switch 20 is movable about a pivot axis L2, which extends in a direction intersecting with a central axis L1 of the left grip 7L, (about an axis at an angle to the up-down direction H) in a direction B1 (first direction) around the pivot axis L2. The flasher switch 20 is also movable about a pivot axis L3, which extends in a direction intersecting with the central axis L1 of the left grip 7L, (about an axis at an angle to the up-down direction H) in a direction B2 (first direction) around the pivot axis L3. That is, the flasher switch 20 is a rocker switch pivotable in the direction B1 around the pivot axis L2 and in the direction B2 around the pivot axis L3. As described above, the flasher switch 20 in the straddled vehicle 1 according to the present embodiment has two pivot axes.

The straddled vehicle 1 allows for manipulations of the right manipulation part 22 and manipulations of the left manipulation part 21 as manipulations of the flasher switch 20. As shown in FIG. 1(c), performing a manipulation of pressing down on the right manipulation part 22 causes the flasher switch 20 to tilt in a pivot direction BR, pivoting about the pivot axis L2. Likewise, as shown in FIG. 1(c), performing a manipulation of pressing down on the left manipulation part 21 causes the flasher switch 20 to tilt in a pivot direction BL, pivoting about the pivot axis L3.

As shown in FIG. 1(c), the flasher switch 20 can be manipulated in two stages by the rider manipulating the flasher switch 20 from an initial position, allowing for a first-stage manipulation and a second-stage manipulation that requires a greater manipulation amount than the first-stage manipulation. The first-stage manipulation and the second-stage manipulation are manipulations in the same direction, and require different manipulation loads and different manipulation amounts.

For example, as shown in FIG. 1(c) and (d), the flasher switch 20 allows the rider to perform the first-stage manipulation by performing a manipulation of pressing down on the right manipulation part 22 from the initial position (manipulation of causing the flasher switch 20 to pivot in the pivot direction BR by a first manipulation amount M1). For another example, the flasher switch 20 allows the rider to perform the second-stage manipulation by performing a manipulation of pressing down on the right manipulation part 22 in the pivot direction BR from the initial position, which is a manipulation that requires a second manipulation amount M2 greater than the first manipulation amount M1. Thus, the flasher switch 20 requires different manipulation amounts for the first-stage manipulation and the second-stage manipulation. Specifically, in the straddled vehicle 1, the first manipulation amount M1 required for the first-stage manipulation is greater than or equal to 1/3 and less than or equal to 2/3 of the second manipulation amount M2 required for the second-stage manipulation (in an example shown in FIG. 1(d), the first manipulation amount M1 is approximately half of the second manipulation amount M2). The flasher switch 20 also allows the rider to perceive both a manipulation sensation corresponding to the first-stage manipulation and a manipulation sensation corresponding to the second-stage manipulation.

As shown in FIG. 1(d), the flasher switch 20 requires a first maximum manipulation load N1 for the first-stage manipulation and a second maximum manipulation load N2 for the second-stage manipulation. Furthermore, the second maximum manipulation load N2 is greater than the first maximum manipulation load N1. The straddled vehicle 1 therefore allows the rider to recognize and distinguish the first-stage manipulation and the second-stage manipulation of the flasher switch 20 from each other through the different manipulation loads and different manipulation amounts in these manipulations.

It should be noted that the left manipulation part 21 may also allow for a first-stage manipulation and a second-stage manipulation like the right manipulation part 22. Performing a manipulation of pressing down on the left manipulation part 21 causes the flasher switch 20 to tilt in the pivot direction BL. Furthermore, the flasher switch 20 returns to the posture in the initial position once the rider removes his/her finger from the flasher switch 20 after the first-stage manipulation has been performed and after the second-stage manipulation has been performed.

As described above, the flasher switch 20 (handlebar switch) of the straddled vehicle 1 is manipulable in the directions B1 and B2 (first direction) by the rider using his/her finger. The flasher switch 20 returns to the initial position once the rider removes his/her finger therefrom. The flasher switch 20 allows for the first-stage manipulation that requires the first manipulation amount M1 as an amount of manipulation from the initial position and the second-stage manipulation that requires the second manipulation amount M2 greater than the first manipulation amount M1 as an amount of manipulation from the initial position. The maximum manipulation load required for the first manipulation amount M1 is the first maximum manipulation load N1, and the maximum manipulation load required for the second manipulation amount M2 is the second maximum manipulation load N2 greater than the first maximum manipulation load. The rate of increase in the manipulation load changes in an increasing direction both when the first manipulation amount M1 is exceeded and when the second manipulation amount M2 is exceeded. The rate of increase in the manipulation load changing in an increasing direction results in the rider perceiving a manipulation sensation both when the first-stage manipulation is performed and when the second-stage manipulation is performed.

The configuration described above enables the straddled vehicle 1 to reduce the chance of a wrong manipulation while making it easier for the rider to recognize each manipulation of the flasher switch 20, improving the convenience of the flasher switch 20.

As shown in FIG. 1(d), in the straddled vehicle 1, a first intermediate manipulation load N3 is set as a trough of the manipulation load to be reached after the first maximum manipulation load N1 is reached and before the second maximum manipulation load N2 is reached. A first load drop N5, which is a difference between the first maximum manipulation load N1 and the first intermediate manipulation load N3, is greater than or equal to 1/4 of the first maximum manipulation load N1 (approximately 1/2 in the example shown in FIG. 1(d)). Furthermore, in the straddled vehicle 1, a second intermediate manipulation load N4 is set as a trough of the manipulation load to be reached when the flasher switch 20 is manipulated by a manipulation amount greater than the second manipulation amount M2. A second load drop N6, which is a difference between the second maximum manipulation load N2 and the second intermediate manipulation load N4, is greater than or equal to 1/4 of the second maximum manipulation load N2 (approximately 1/3 in the example shown in FIG. 1(d)).

It should be noted that the straddled vehicle according to the present teaching is not limited to the present embodiment, and may have a configuration in which an intermediate manipulation load is not set. For example, as a first example of configurations in which the intermediate manipulation load is not set, the straddled vehicle may have a configuration shown in FIG. 8(b). The straddled vehicle 1 according to the example shown in FIG. 8(b) has a configuration in which the intermediate manipulation load is not set as a trough of the manipulation load to be reached after a first maximum manipulation load N1a is reached and before a second maximum manipulation load N2a is reached, requiring a predetermined amount of manipulation to be performed while maintaining the first maximum manipulation load N1a.

Specifically, the straddled vehicle 1 according to the example shown in FIG. 8(b) has a configuration in which the intermediate manipulation load is not set as a trough of the manipulation load to be reached after the first maximum manipulation load N1a is reached and before the second maximum manipulation load N2a is reached, and the manipulation load increases until a specific timing, and then a manipulation with the first maximum manipulation load N1a is continued until a first manipulation amount M1a is reached. In this configuration, the rate of increase in the manipulation load becomes higher at a timing T1 when the first manipulation amount M1a is exceeded (timing when the manipulation shifts to the second-stage manipulation). In the example shown in FIG. 8(b), the rider manipulating the flasher switch 20 perceives a sensation as if the flasher switch 20 has become heavier (manipulation sensation) when the first manipulation amount M1a is exceeded. This allows the rider of the straddled vehicle 1 according to the example shown in FIG. 8(b) to recognize the execution of the first-stage manipulation.

In the example shown in FIG. 8(b), a second intermediate manipulation load N4a is set as a trough of the manipulation load to be reached when the flasher switch 20 is manipulated by a manipulation amount greater than a second manipulation amount M2a. A second load drop N6a, which is a difference between the second maximum manipulation load N2a and the second intermediate manipulation load N4a, is greater than or equal to 1/4 of the second maximum manipulation load N2a (approximately 1/3 in the example shown in FIG. 8(b)).

For example, as a second example of configurations in which the intermediate manipulation load is not set, the straddled vehicle may have a configuration shown in FIG. 8(c). The straddled vehicle 1 according to the example shown in FIG. 8(c) has a configuration in which the intermediate manipulation load is not set as a trough of the manipulation load to be reached after a first maximum manipulation load N1b is reached and before a second maximum manipulation load N2b is reached. In this configuration, the manipulation load increases until a first manipulation amount M1b is reached, and the rate of increase in the manipulation load becomes higher at a timing T1 when the first manipulation amount M1b is exceeded. The maximum manipulation load (first maximum manipulation load N1b) among manipulation loads for the first manipulation amount M1b is reached when the first manipulation amount M1b is reached (timing T1). In the example shown in FIG. 8(c), the rider manipulating the flasher switch 20 perceives a sensation as if the flasher switch 20 has become even heavier (manipulation sensation) when the first manipulation amount M1b is exceeded. This allows the rider of the straddled vehicle 1 according to the example shown in FIG. 8(c) to recognize the execution of the first-stage manipulation.

In the example shown in FIG. 8(c), as in the examples shown in FIG. 1(d) and FIG. 8(b), a second intermediate manipulation load N4b is set as a trough of the manipulation load to be reached when the flasher switch 20 is manipulated by a manipulation amount greater than a second manipulation amount M2b. A second load drop N6b, which is a difference between the second maximum manipulation load N2b and the second intermediate manipulation load N4b, is greater than or equal to 1/4 of the second maximum manipulation load N2b (approximately 1/3 in the example shown in FIG. 8(c)).

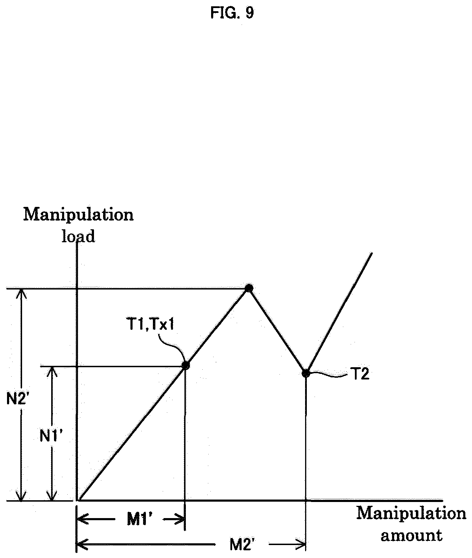

The following now describes a flasher switch shown as a reference example in FIG. 9. The flasher switch in FIG. 9 has a configuration in which the rate of increase in the manipulation load does not change when the manipulation shifts from the first-stage manipulation to the second-stage manipulation. That is, in the reference example shown in FIG. 9, the rate of increase in the manipulation load is substantially constant until the second maximum manipulation load is reached, making it difficult to obtain the effects of the present teaching.

### <Operations of Direction Indicators corresponding to Respective Manipulations of Flasher Switch>

The following describes manipulations of the flasher switch 20 and corresponding flashing operations of the direction indicators 8 with reference to FIG. 2(b).

In the straddled vehicle 1, with respect to the flasher switch 20, the following four patterns of manipulations and four functions corresponding to these manipulations can be implemented: the first-stage manipulation of the right manipulation part 22, the second-stage manipulation of the right manipulation part 22, the first-stage manipulation of the left manipulation part 21, and the second-stage manipulation of the left manipulation part 21.

Specifically, upon the first-stage manipulation, the flasher switch 20 according to the present embodiment causes the direction indicators 8 to flash a predetermined number of times (for example, three times), and then this flashing operation of the direction indicators 8 is terminated (one-touch manipulation). Upon the second-stage manipulation, the flasher switch 20 causes the direction indicators 8 to flash continuously until another manipulation is performed (turn manipulation). As described above, with respect to the flasher switch 20, the flashing operation of the direction indicators 8 corresponding to the first-stage manipulation is different from the flashing operation of the direction indicators 8 corresponding to the second-stage manipulation.

In the following description, the first-stage manipulation of the right manipulation part 22 may be referred to simply as a "right one-touch switch manipulation", the second-stage manipulation of the right manipulation part 22 simply as a "right turn switch manipulation", the first-stage manipulation of the left manipulation part 21 simply as a "left one-touch switch manipulation", and the second-stage manipulation of the left manipulation part 21 simply as a "left turn switch manipulation". A state in which the flasher switch 20 is not being manipulated or a state in which a function executed through a manipulation of the flasher switch 20 has been canceled may be referred to and described collectively and simply as "canceled". That is, the "canceled" state means a state in which no flashing operation of the direction indicators 8 is being performed (initial state).

The one-touch switch manipulations are, for example, intended for use when the rider intends to change lanes. When a one-touch switch manipulation is performed, the straddled vehicle 1 automatically terminates the flashing operation after the direction indicators 8 have flashed several times. Thus, the straddled vehicle 1 eliminates the need for the rider to bother to perform a manipulation for canceling the flashing operation of the direction indicators 8. As a result, the straddled vehicle 1 achieves an improvement in convenience for the rider in lane changes, for example.

The turn switch manipulations are intended for when the rider waits to make a right or left turn. When a turn switch manipulation is performed, the straddled vehicle 1 continues the flashing operation of the direction indicators 8 until a canceling action is performed.

In the following description, the flashing operation of the direction indicators 8 for flashing a predetermined number of times that is executed through a one-touch switch manipulation may be referred to and described simply as "ongoing one-touch flashing" or a "first flashing operation". The ongoing one-touch flashing includes a flashing operation executed through the first-stage manipulation of the left manipulation part 21 and a flashing operation executed through the first-stage manipulation of the right manipulation part 22. These flashing operations may be referred to and described as "left one-touch flashing" and "right one-touch flashing", respectively.

The operation of the direction indicators 8 for flashing continuously that is executed through a turn switch manipulation may be referred to and described simply as "ongoing continuous flashing" or a "second flashing operation". The ongoing continuous flashing includes a flashing operation executed through the second-stage manipulation of the left manipulation part 21 and a flashing operation executed through the second-stage manipulation of the right manipulation part 22. These flashing operations may be referred to and described as "left continuous flashing" and "right continuous flashing", respectively.

### <Switch Toggling Timing>

The following now describes timings of switch toggling of the flasher switch 20. In the following description, toggling from the initial state in which the direction indicators 8 are performing no flashing operation to a state in which the direction indicators 8 are performing a flashing operation (toggling from an off state to an on state), toggling from the state in which the direction indicators 8 are performing the flashing operation to the initial state in which the direction indicators 8 are performing no flashing operation (toggling from the on state to the off state), and toggling from the current flashing operation to another flashing operation may be referred to and described collectively and simply as "switch toggling". A state related to the first flashing operation (operation of the direction indicators 8 for flashing a predetermined number of times) may be referred to and described as "first flashing operation ON" and a state related to the second flashing operation (operation of the direction indicators 8 for flashing continuously) as "second flashing operation ON".

As shown in FIG. 8(a), in the straddled vehicle 1 according to the present embodiment, performing the first-stage manipulation when the flasher switch 20 is in the initial state (switch OFF state) causes switch toggling from the switch off state to the first flashing operation ON state at a timing Tx1 after the first maximum manipulation load N1 is reached and before the first manipulation amount M1 is reached. Furthermore, in the straddled vehicle 1, performing the second-stage manipulation during the execution of the first flashing operation causes switch toggling from the first flashing operation ON state to the second flashing operation ON state at a timing Tx2 after the second maximum manipulation load N2 is reached and before the second manipulation amount M2 is reached. Performing the first-stage manipulation or the second-stage manipulation during the execution of the second flashing operation causes switch toggling from the second flashing operation ON state to the switch OFF state (cancels the flashing operation) at the timing Tx1 after the first maximum manipulation load N1 is reached and before the first manipulation amount M1 is reached.

The timings Tx1 and Tx2 for the switch toggling in the straddled vehicle according to the present teaching are not limited to those in the present embodiment. For example, in the straddled vehicle according to the present teaching, the timings Tx1 and Tx2 for the switch toggling may be when the intermediate manipulation load in each stage of manipulation is reached (when the first manipulation amount or the second manipulation amount is reached). For example, the switch toggling related to the first-stage manipulation may be set to occur at a timing when the manipulation shifts from the first-stage manipulation to the second-stage manipulation (timing T1 when the first manipulation amount M1 is reached). The timing Tx2 for the switch toggling related to the second-stage manipulation may be when the second manipulation amount M2 is reached. In the straddled vehicle according to the present teaching, the timings Tx1 and Tx2 for the switch toggling may be when the intermediate manipulation load in each stage of manipulation is exceeded.

### <Manipulations during Canceled State>

The following describes the manipulations of the flasher switch 20 and the flashing operations of the direction indicators 8 executed through the manipulations using specific examples with reference to FIG. 2(b). As shown in FIG. 2(b), performing the right turn switch manipulation (second-stage manipulation of the right manipulation part 22) when the current state is the canceled state (initial state) causes the right indicator lamps 8R of the direction indicators 8 to start the flashing operation (right continuous flashing), and the same flashing operation continues until another manipulation is performed. Performing the right one-touch switch manipulation (first-stage manipulation of the right manipulation part 22) when the current state is the canceled state (initial state) causes the right indicator lamps 8R to start the flashing operation (right one-touch flashing), and the flashing operation is automatically terminated after a predetermined number of flashes (for example, three flashes).

Performing the left turn switch manipulation (second-stage manipulation of the left manipulation part 21) when the current state is the canceled state (initial state) causes the left indicator lamps 8L to start the flashing operation (left continuous flashing), and the flashing operation continues until another manipulation is performed. Furthermore, performing the left one-touch switch manipulation (first-stage manipulation of the left manipulation part 21) when the current state is the canceled state (initial state) causes the left indicator lamps 8L to start the flashing operation (left one-touch flashing), and the flashing operation is automatically terminated after a predetermined number of flashes (for example, three flashes).

### <Right Turn Switch Manipulation during Ongoing Left One-touch Flashing (during Three-time Flashing of Left Indicator Lamps)>

As shown in FIG. 2(b), performing the right turn switch manipulation when the current state is the ongoing left one-touch flashing state cancels the flashing operation of the left indicator lamps 8L (left lamps off) and causes the right indicator lamps 8R to start the flashing operation. Specifically, performing the second-stage manipulation of the right manipulation part 22 before the left indicator lamps 8L have finished flashing the predetermined number of times cancels the flashing operation of the left indicator lamps 8L (left lamps off) and causes the right indicator lamps 8R to start the flashing operation (right continuous flashing). The flashing operation of the right indicator lamps 8R (right continuous flashing) continues until another manipulation is performed (right continuous flashing).

Performing the right one-touch switch manipulation when the current state is the ongoing left one-touch flashing state cancels the flashing operation of the left indicator lamps 8L (left lamps off) and causes the right indicator lamps 8R to start the flashing operation (right one-touch flashing). Specifically, performing the first-stage manipulation of the right manipulation part 22 before the left indicator lamps 8L have finished flashing the predetermined number of times cancels the flashing operation of the left indicator lamps 8L (left lamps off) and causes the right indicator lamps 8R to start the flashing operation (right one-touch flashing). The flashing operation of the right indicator lamps 8R (right one-touch flashing) is terminated after a predetermined number of flashes (right one-touch flashing).

Performing the left turn switch manipulation when the current state is the ongoing left one-touch flashing state causes the left indicator lamps 8L to continue the flashing operation (left continuous flashing). Specifically, performing the second-stage manipulation of the left manipulation part 21 before the left indicator lamps 8L have finished flashing the predetermined number of times causes the left indicator lamps 8L to continue the flashing operation.

Performing the left one-touch switch manipulation when the current state is the ongoing left one-touch flashing state, the number of times the left indicator lamps 8L have flashed (flashing count) is reset. Specifically, performing the first-stage manipulation of the left manipulation part 21 before the left indicator lamps 8L have finished flashing the predetermined number of times causes the number of times the left indicator lamps 8L have flashed (flashing count) to be reset. That is, the left indicator lamps 8L performs the flashing operation by starting the predetermined number of flashes from the beginning and turns off upon finishing the predetermined number of flashes (left one-touch flashing count reset).

### <Canceling Manipulation during Continuous Operation>

Note here that the straddled vehicle 1 has a configuration in which performing a manipulation of the flasher switch 20 in the same direction as in the preceding manipulation when the right indicator lamps 8R are performing the continuous flashing operation (ongoing right continuous flashing) or when the left indicator lamps 8L are performing the continuous flashing operation (ongoing left continuous flashing) cancels the current flashing operation being performed by the direction indicators 8. That is, the straddled vehicle 1 is configured so that performing the first-stage manipulation or the second-stage manipulation of the flasher switch 20 when the direction indicators 8 are performing an operation corresponding to the second-stage manipulation of the flasher switch 20 cancels the currently performed flashing operation of the direction indicators 8.

For example, in the straddled vehicle 1, performing the second-stage manipulation (right turn switch manipulation) of the right manipulation part 22 or the first-stage manipulation (right one-touch switch manipulation) of the right manipulation part 22 when the right indicator lamps 8R are performing the continuous flashing operation (right continuous flashing) cancels the flashing operation (right continuous flashing). Likewise, in the straddled vehicle 1, performing the second-stage manipulation (left turn switch manipulation) of the left manipulation part 21 or the first-stage manipulation (left one-touch switch manipulation) of the left manipulation part 21 when the left indicator lamps 8L are performing the continuous flashing operation (left continuous flashing) cancels the flashing operation (left continuous flashing).

As described above, in the straddled vehicle 1, performing a manipulation of the flasher switch 20 in the same direction as in the immediately preceding manipulation when a flashing operation for a turn is performed (ongoing continuous flashing) cancels the flashing operation being performed. That is, even when the direction indicators 8 are performing the continuous flashing operation, the flasher switch 20 allows the rider to cancel the flashing operation (continuous flashing) through a manipulation of the flasher switch 20 without the need for a manipulation of any other switch such as a cancel switch.

Furthermore, in the straddled vehicle 1, performing the right one-touch manipulation or the right turn switch manipulation of the flasher switch 20 when the direction indicators 8 are performing the left one-touch flashing operation (three-time flashing operation of the left indicator lamps 8L) cancels the flashing operation (left one-touch flashing). Furthermore, in the straddled vehicle 1, performing the left one-touch manipulation or the left turn switch manipulation of the flasher switch 20 when the direction indicators 8 are performing the right one-touch flashing operation (three-time flashing operation of the right indicator lamps 8R) cancels the flashing operation (right one-touch flashing). That is, when the direction indicators 8 are performing a flashing operation involving a predetermined number of flashes (one-touch flashing), the straddled vehicle 1 allows the rider to cancel the operation (one-touch flashing) through a manipulation of the flasher switch 20 in a different direction (opposite direction) from that in the preceding manipulation without the need for a manipulation of a button (cancel button, for example). Thus, the configuration described above enables the straddled vehicle 1 to implement a flasher switch 20 having a cancel function without the need for a cancel button.

Note here that some conventional flasher switches have a cancel button for canceling a currently performed operation. For example, some conventional flasher switches have a cancel button for canceling a flashing operation being currently performed by the direction indicators 8 (for example, the continuous flashing operation of the right indicator lamps 8R). Conventional flasher switches having a cancel button need space to accommodate the cancel button, and thus have limitations on the positions where the flasher switches are disposed and on the configuration (size, for example) of manipulation parts of the flasher switches.

For example, some cancel switch-equipped flasher switches have a cancel button between a left manipulation part for operations of left indicator lamps and a right manipulation part for operations of right indicator lamps. In the case of a flasher switch having such a cancel button in the center of the flasher switch, the left manipulation part is relatively close to the rider's left fingers, but the right manipulation part (right-side knob) is in a position distant from the rider's left fingers because of the presence of the cancel button in the center of the flasher switch. Furthermore, there has been a demand for such a flasher switch to have the right manipulation part in a position closer to the rider's left fingers for a further improvement in manipulability.

The inventors of the present teaching have given consideration to the configuration of such a conventional flasher switch for an improvement, to find that the flexibility in the configuration of the flasher switch can be increased by making it possible to implement the cancel function through a manipulation of the flasher switch without providing a cancel button. In the configuration of the straddled vehicle 1 according to the present embodiment, the right manipulation part 22 of the flasher switch 20 is in a position closer to the rider's left thumb. Because of this configuration, the straddled vehicle 1 achieves an improvement in manipulability of the flasher switch 20 for the rider.

### <Lead Wire Accommodation>

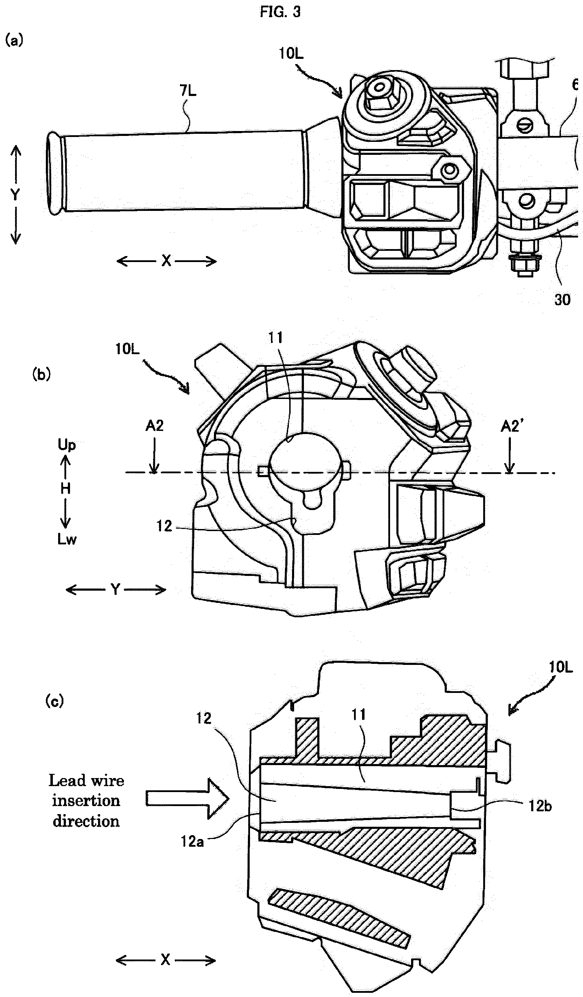

The following describes a lead wire insertion part 12 in a switch box 10 with reference to FIG. 3.

As shown in FIG. 3(b), the straddled vehicle 1 according to the present embodiment has a handlebar insertion part 11 and the lead wire insertion part 12 formed inside the switch box 10. As shown in FIG. 3(b), the lead wire insertion part 12 is formed by expanding a portion of an opening of the handlebar insertion part 11 in the downward direction Lw. As shown in FIG. 3(c), the lead wire insertion part 12 is formed to extend in the left-right direction X. Furthermore, the lead wire insertion part 12 has a tapered shape with an opening diameter thereof decreasing from a first opening 12a formed at one end that serves as an entrance of lead wires 30 toward a second opening 12b formed at an opposite end out of the two ends in the left-right direction X.

Because of the configuration of the straddled vehicle 1 described above, the entrance (first opening 12a) facilitates insertion of the lead wires 30 in installation of the lead wires 30 into the switch box 10, and an exit (second opening 12b) allows for positioning of the lead wires 30. Thus, the straddled vehicle 1 achieves an improvement in work efficiency in the installation of the lead wires 30. Furthermore, in the straddled vehicle 1, a lead wire 30 for a grip warmer is threaded through the inside of the switch box 10 to be routed along the handlebar 6, so that the lead wire 30 is not exposed to the outside of the switch box 10. As a result, the straddled vehicle 1 achieves an improvement in appearance of an area around the switch box 10.

Although the present embodiment has been described using the left switch box 10L as an example, the configuration described above (lead wire insertion part 12) may be applied to the right switch box 10R.

### <Configuration of Shift Operation Part>

The following describes a configuration of an operation part (shift operation part 13) of the shift assist device with reference to FIG. 4. Although not shown, the straddled vehicle 1 includes the shift assist device that assists in shifting up and down (shift operation) of the transmission. The shift operation part 13 is used to drive an actuator (not shown) of the shift assist device.

As shown in FIG. 4, the shift operation part 13 is provided as a lever extending in the forward direction Fr of the left switch box 10L. The shift operation part 13 includes a first knob 14 as a lever in the forward direction Fr and a second knob 15 as a lever in the backward direction Rr. In the straddled vehicle 1 according to the present embodiment, the first knob 14 and the second knob 15 of the shift operation part 13 each have two manipulation portions 16 (finger contact surfaces) that receive contact of the rider's fingers. In more detail, the first knob 14 has two manipulation portions 16 (finger contact surfaces), i.e., a first manipulation portion 16a and a second manipulation portion 16b. The second knob 15 has two manipulation portions 16 (manipulation surfaces), i.e., a third manipulation portion 16c and a fourth manipulation portion 16d. As described above, the straddled vehicle 1 includes the two knobs that serve as levers for the shift operation (first and second knobs 14 and 15), and the plurality of (four in the present embodiment) manipulation surfaces (manipulation portions 16) for manipulations by the rider's fingers.

As shown in FIG. 4, the first, second, and third manipulation portions 16a, 16b, and 16c are manipulable by the rider using his/her index finger (see portions in phantom lines in FIG. 4). The fourth manipulation portion 16d is manipulable by the rider using his/her thumb (see a portion in a dashed line in FIG. 4). The fourth manipulation portion 16d, which is a manipulation surface for the rider's thumb, is located further forward than the central axis L3 of the handlebar 6 in the forward direction Fr.

As described above, the shift operation part 13 according to the present embodiment has the four manipulation portions 16. This allows the rider to choose how to manipulate the shift operation part 13 based on his/her preference. As a result, the shift operation part 13 can contribute to an improvement in manipulability when the rider performs the shift operation.

Specifically, the rider may wish to use his/her index finger and thumb to perform a manipulation, or may wish to use either the first knob 14 or the second knob 15 to perform a manipulation. In such a case, for example, when the rider wishes to use only his/her index finger to perform a manipulation, the shift operation part 13 according to the present embodiment allows the rider to choose either (a) a manipulation using only the first knob 14 (first and second manipulation portions 16a and 16b) or (b) a manipulation using the second knob 15 (third manipulation portion 16c) and the first knob 14 (second manipulation portion 16b). When the rider wishes to use his/her index finger and thumb to perform a manipulation, for example, the rider can choose either (c) a manipulation using the first knob 14 (first manipulation portion 16a) and the second knob 15 (fourth manipulation portion 16d) or (d) a manipulation using only the second knob 15 (third and fourth manipulation portions 16c and 16d).

### <Cover of Lead Wires>

The following describes a cover 17 of lead wires that is provided in the vicinity of the right switch box 10R. FIG. 5 shows the cover 17 attached to a stop switch 26 located in the vicinity of the right switch box 10R. As shown in FIG. 5(a), the cover 17 according to the present embodiment is a box-shaped housing.

As shown in FIG. 5, lead wires 31 for the stop switch are mounted in the vicinity of the right switch box 10R. The cover 17 can accommodate a plurality of lead wires 31 together. That is, the cover 17 has a structure that completely surrounds bent lead wires 31, thereby preventing a reduction in appearance due to different lengths of the lead wires. Thus, the straddled vehicle 1 achieves an improvement in appearance.

### <Switch Box Attachment Structure>

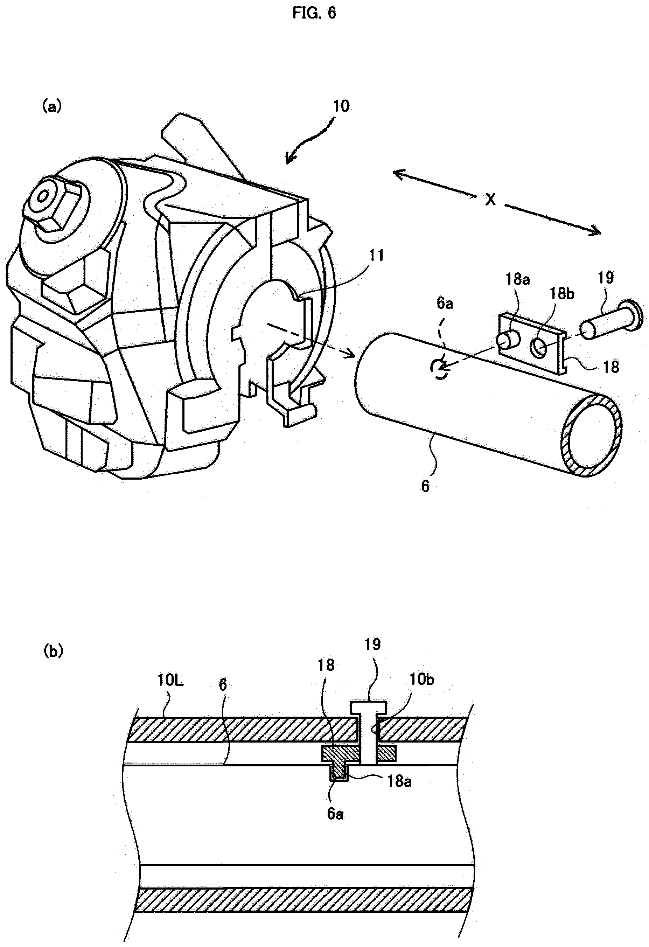

The following describes an attachment structure for the switch box 10 to the handlebar 6 with reference to FIG. 6.

First, for attaching the switch box 10 to the handlebar 6 of the straddled vehicle 1 according to the present embodiment, a protruding portion 18a of a clip 18 is fitted into a positioning hole 6a of the handlebar 6 as shown in FIG. 6(a). Next, the handlebar 6 is inserted into the handlebar insertion part 11 of the switch box 10, and the switch box 10 is moved along the axis of the handlebar 6 (in the left-right direction X). Next, a screw 19 is inserted through a screw hole 18b in the clip 18 and a screw hole 10b in the switch box 10 to fasten the switch box 10 and the clip 18 to each other. In this way, the switch box 10 is attached to the handlebar 6 using the clip 18.

As shown in FIG. 6(b), when the switch box 10 is attached to the handlebar 6, the clip 18 and the switch box 10 are fastened together with the screw 19. This reduces rattling between the clip 18 and the switch box 10. The switch box 10 can be easily detached from the handlebar 6 by removing the screw 19. As described above, the straddled vehicle 1 according to the present embodiment also allows for easy detachment of the switch box 10, achieving an improvement in maintainability.

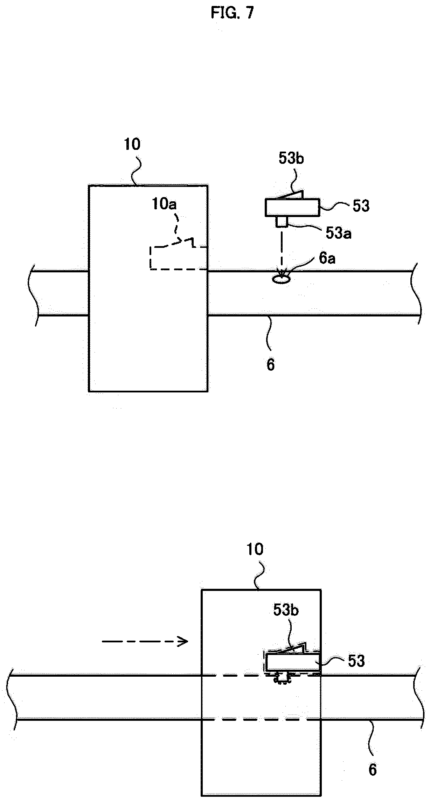

The following now describes an example of a conventional attachment structure for the switch box 10 to the handlebar 6 with reference to FIG. 7. As shown in FIG. 7, a clip 53 having a protruding portion 53a and an engagement portion 53b can be employed as the attachment structure for the switch box 10 to the handlebar 6. The handlebar 6 has a positioning hole 6a into which the protruding portion 53a is to be fitted. For attaching the switch box 10 to the handlebar 6, the protruding portion 53a of the clip 53 is fitted into the positioning hole 6a first, and then the switch box 10 is slid to the position of the clip 53 as shown in FIG. 7. Once the switch box 10 has been moved to a position where the protruding portion 53a fits into a recessed portion 10a formed in the switch box 10, the switch box 10 is positioned relative to the handlebar 6.

In some cases where the switch box 10 is attached to the handlebar 6 using the clip 53 having the engagement portion 53b, rattling between components (rattling between the switch box 10 and the clip 53, and rattling between the clip 53 and the handlebar 6) occurs after the attachment. Furthermore, once the clip 53 has been inserted, the detachment of the switch box 10 is cumbersome, requiring a special tool or the like to remove the clip 53. The attachment structure shown in FIG. 6 for the switch box 10 to the handlebar 6 allows for not only an improvement in the issue of rattling (in particular, rattling between the clip 53 and the handlebar 6) but also an improvement in maintainability by eliminating the need for a special tool.

### Reference Signs List

- 1: straddled vehicle
- 8: direction indicators (lighting equipment)
- 8L: left indicator lamp (lighting equipment, direction indicator)
- 8R: right indicator lamp (lighting equipment, direction indicator)
- 20: flasher switch (handlebar switch)
- M1: first manipulation amount
- M2: second manipulation amount
- N1: first maximum manipulation load
- N2: second maximum manipulation load
- N3: first intermediate manipulation load

## Claims

1. A straddled vehicle (1) comprising a handlebar (6) provided with at least one grip (7L) and a handlebar switch (20) provided on the handlebar (6) and configured to allow a rider of the straddled vehicle (1) to manipulate the handlebar switch (20) while holding the grip (7L) of a handlebar (6) with a hand of the rider using a finger of the hand holding the grip (7L), wherein
the handlebar switch (20) is configured to be manipulable from an initial position of the handlebar switch (20) in a first direction by the rider using the finger,
the handlebar switch (20) is configured to return to the initial position once the rider removes the finger from the handlebar switch (20),
the handlebar switch (20) is configured to operate with a first-stage manipulation that requires a first manipulation amount (M1) as an amount of manipulation from the initial position and a second-stage manipulation that requires a second manipulation amount (M2) set to be greater than the first manipulation amount (M1) as an amount of manipulation from the initial position, wherein the handlebar switch (20) is configured to provide a maximum manipulation load required to reach the first manipulation amount (M1) as a first maximum manipulation load (N1), and
a maximum manipulation load required to reach the second manipulation amount (M2) as a second maximum manipulation load (N2) is set to be greater than the first maximum manipulation load (N1), and configured to provide a rate of increase in the manipulation load that changes in an increasing direction both when the first manipulation amount (M1) is exceeded and when the second manipulation amount (M2) is exceeded, such that the rate of increase in the manipulation load changing in the increasing direction is perceivable the finger of the hand of the rider manipulating the handlebar switch (20) as a manipulation sensation both when the first-stage manipulation is performed and when the second-stage manipulation is performed, wherein
the first-stage manipulation is a manipulation where the rider manipulates the handlebar switch (20) in the first direction while holding the grip (7L) on the handlebar (6) using the finger of the hand holding the grip (7L), and the manipulation amount from the initial position of the handlebar switch (20) is the first manipulation amount (M1), the second-stage manipulation is a manipulation where the rider manipulates the handlebar switch (20) in the first direction while holding the grip (7L) on the handlebar (6) using the finger of the hand holding the grip (7L), and the manipulation amount from the initial position of the handlebar switch (20) is the second manipulation amount (M2) greater than the first manipulation amount (M1), wherein the handlebar switch (20) is configured to retum to its initial position in a direction opposite to the first direction, when the rider is performing the first-stage manipulation by manipulating the handlebar switch (20) in the first direction while holding the grip (7L) on the handlebar (6) using the finger of the hand holding the grip (7L), by removing the finger from the handlebar switch (20) **characterized in that**, the handlebar switch is configured to return to its initial position in a direction opposite to the first direction, when the rider is performing the second-stage manipulation by manipulating the handlebar switch (20) in the first direction while holding the grip (7L) on the handlebar (6) using the finger of the hand holding the grip (7L), by removing the finger from the handlebar switch (20).

2. The straddled vehicle (1) according to claim 1, **characterized in that** the first maximum manipulation load (N1) is set to be greater than or equal to half of the second maximum manipulation load (N2).

3. The straddled vehicle (1) according to claim 1 or 2, **characterized in that** the handlebar switch (20) is configured to provide a first intermediate manipulation load (N3) set as a trough of the manipulation load to be reached after the first maximum manipulation load (N1) is reached and before the second maximum manipulation load (N2) is reached, and configured to provide a first load drop (N5), which is a difference between the first maximum manipulation load (N1) and the first intermediate manipulation load (N3), the first load drop (N5) is set to be greater than or equal to 1/4 of the first maximum manipulation load (N1).

4. The straddled vehicle (1) according to any one of claims 1 to 3, **characterized in that** the first manipulation amount (M1) is set to be greater than or equal to 1/3 and less than or equal to 2/3 of the second manipulation amount (M2).

5. The straddled vehicle (1) according to any one of claims 1 to 4, **characterized in that** the handlebar switch (20) is configured to provide a second intermediate manipulation load (N4) set as a trough of the manipulation load in a range corresponding to manipulation amounts set to be greater than the manipulation amount corresponding to the second maximum manipulation load (N2), and
configured to provide a second load drop (N6), which is a difference between the second maximum manipulation load (N2) and the second intermediate manipulation load (N4), the second load drop (N6) is set to be greater than or equal to 1/4 of the second maximum manipulation load (N2).

6. The straddled vehicle (1) according to any one of claims 1 to 5, **characterized in that** the straddled vehicle (1) further comprises lighting equipment (8), and the handlebar switch (20) is configured to operate the lighting equipment (8) included in the straddled vehicle (1).

7. The straddled vehicle (1) according to claim 6, **characterized in that** the lighting equipment is direction indicators (8) configured for flashing operation, a first flashing operation of the direction indicators (8) is provided to correspond to the first-stage manipulation and a second flashing operation of the direction indicators (8) is provided to correspond to the second-stage manipulation, wherein the first flashing operation of the direction indicators (8) corresponding to the first-stage manipulation is different from the second flashing operation of the direction indicators (8) corresponding to the second-stage manipulation.

8. The straddled vehicle (1) according to any one of claims 1 to 7, **characterized in that** the handlebar switch (20) is configured to operate a device included in the straddled vehicle (1), and is configured so that performing the first-stage manipulation or the second-stage manipulation when the device is performing an operation corresponding to the first-stage manipulation or the second-stage manipulation cancels the currently performed operation of the device.

9. The straddled vehicle (1) according to claim 6, **characterized in that** an operation of the lighting equipment is configured for operating either a first operation of the lighting equipment to correspond to the first-stage manipulation or a second operation of the lighting equipment to correspond to the second-stage manipulation in accordance with driving conditions of the straddled vehicle (1).

10. The straddled vehicle (1) according to claim 9, **characterized in that** the lighting equipment is a headlamp,
the headlamp is configured to control light emission to a plurality of areas in front of the straddled vehicle (1), the plurality of areas including at least one upper area,
the at least one upper area is partially or entirely located above a horizontal reference line when the straddled vehicle (1) is in an upright position, and
an operation of the headlamp corresponding to either the first operation of the headlamp to correspond to the first-stage manipulation or a second operation of the headlamp to correspond to the second-stage manipulation to emit light to the at least one upper area in accordance with driving conditions of the straddled vehicle (1).

## Patentansprüche

1. Ein Spreizsitzfahrzeug (1) mit einem Lenker (6), der mit zumindest einem Griff (7L) vorgesehen ist, und einem Lenker-Schalter (20), der am Lenker (6) angeordnet und so konfiguriert ist, um dem Fahrer des Spreizsitzfahrzeugs (1) zu ermöglichen, den Lenker-Schalter (20), während er den Griff (7L) eines Lenkers (6) mit einer Hand des Fahrers, die den Griff (7L) hält, unter Verwendung eines Fingers der Hand zu betätigen, wobei
der Lenker-Schalter (20) so konfiguriert ist, um vom Fahrer unter Verwendung des Fingers aus einer Ausgangsposition des Lenker-Schalters (20) in eine erste Richtung betätigt zu werden,
der Lenker-Schalter (20) so konfiguriert ist, um in die Ausgangsposition zurückzukommen, sobald der Fahrer den Finger vom Lenker-Schalter (20) nimmt, der Lenker-Schalter (20) so konfiguriert ist, um mit einer Ersten-Stufe-Betätigung, die einen Ersten-Betätigungsbetrag (M1) als Betrag ausgehend von der Ausgangsposition erfordert, und einer Zweiten-Stufe-Betätigung, die einen Zweiten-Betätigungsbetrag (M2) setzt, der größer als der Erste-Betätigungsbetrag (M1) ist, als Betrag ausgehend von der Ausgangsposition zu arbeiten, wobei der Lenker-Schalter (20) so konfiguriert ist, um eine maximale Betätigungslast, die erforderlich ist, um den ersten Betätigungsbetrag (M1) zu erreichen, als erste maximale Betätigungslast (N1) bereitzustellen, und
eine maximale Bewegungslast, die erforderlich ist, um den zweiten Bewegungsbetrag (M2) zu erreichen, als zweite maximale Bewegungslast (N2) größer als die erste maximale Bewegungslast (N1) gesetzt ist, und so konfiguriert ist, dass er eine Steigerungsrate der Bewegungslast bereitstellt, die sich sowohl bei Überschreiten des ersten Bewegungsbetrags (M1) als auch bei Überschreiten des zweiten Bewegungsbetrags (M2) überschritten wird, so dass die sich in steigender Richtung ändernde Steigerungsrate der Betätigungslast sowohl bei der Durchführung der Ersten-Stufe-Betätigung als auch bei der Durchführung der Zweiten-Stufe-Betätigung vom Finger der Hand des Fahrers, der den Lenker-Schalter (20) betätigt, als Betätigungsgefühl wahrgenommen wird, wobei
die Erste-Stufe-Betätigung eine Betätigung ist, bei der der Fahrer den Lenker-Schalter (20) in die erste Richtung mit dem Finger der Hand betätigt, während er den Griff (7L) am Lenker (6) der Hand hält, die den Griff (7L) umschließt, und der Betrag von der Ausgangsposition des Lenker-Schalters (20) der erste Betrag (M1) ist, die Zweiten-Stufe-Betätigung eine Bewegung ist, bei der der Fahrer den Lenker-Schalter (20) in die erste Richtung mit dem Finger der Hand betätigt, während er den Griff (7L) am Lenker (6) mit Hand hält, die den Griff (7L) umschließt, und der Betätigungsbetrag von der Ausgangsposition des Lenker-Schalters (20) der zweite Betätigungsbetrag (M2) ist, der größer ist als der erste Betätigungsbetrag (M1), wobei der Lenker-Schalter (20) so konfiguriert ist, um in eine der ersten Richtung entgegengesetzte Richtung in seine Ausgangsposition zurückzukehren, wenn der Fahrer die Erste-Stufe-Betätigung mit dem Finger der Hand durchführt, indem er den Lenker-Schalter (20) in die erste Richtung betätigt, während er den Griff (7L) am Lenker (6) mit der Hand hält, die den Griff (7L) hält, indem er den Finger vom Lenker-Schalter (20) entfernt, **dadurch gekennzeichnet, dass** der Lenker-Schalter so konfiguriert ist, um in eine der ersten Richtung entgegengesetzte Richtung in seine Ausgangsposition zurückzukehren, wenn der Fahrer die Zweite-Stufe-Betätigung durchführt, indem er den Lenker-Schalter (20) in die erste Richtung betätigt, während er den Griff (7L) am Lenker (6) mit dem Finger der Hand hält, die den Griff (7L) hält, vom Lenker-Schalter (20) entfernt.

2. Das Spreizsitzfahrzeug (1) gemäß Anspruch 1, **dadurch gekennzeichnet, dass** die erste maximale Betätigungslast (N1) so gesetzt ist, dass sie größer oder gleich der Hälfte der zweiten maximalen Betätigungslast (N2) ist.

3. Das Spreizsitzfahrzeug (1) gemäß Anspruch 1 oder 2, **dadurch gekennzeichnet, dass** der Lenker-Schalter (20) so konfiguriert ist, um eine erste Zwischen-Betätigungslast (N3) zu setzen, die als ein Talpunkt der Betätigungslast festgelegt ist, der nach Erreichen der ersten maximalen Betätigungslast (N1) und vor Erreichen der zweiten maximalen Betätigungslast (N2) erreicht werden soll, und
so ausgelegt ist, dass er einen ersten Lastabfall (N5) bereitstellt, der eine Differenz zwischen der ersten maximalen Betätigungslast (N1) und der ersten Zwischen-Betätigungslast (N3) darstellt, wobei der erste Lastabfall (N5) so gesetzt ist, dass er größer oder gleich 1/4 der ersten maximalen Betätigungslast (N1) ist.

4. Das Spreizsitzfahrzeug (1) gemäß irgendeinem der Ansprüche 1 bis 4, **dadurch gekennzeichnet, dass** der erste Betätigungsbetrag (M1) so gesetzt ist, dass er größer oder gleich 1/3 und kleiner oder gleich 2/3 des zweiten Betätigungsbetrags (M2) ist.

5. Das Spreizsitzfahrzeug (1) gemäß irgendeinem der Ansprüche 1 bis 4, **dadurch gekennzeichnet, dass** der Lenker-Schalter (20) so konfiguriert ist, um eine zweite Zwischen-Betätigungslast (N4) bereitzustellen, die als Talpunkt der Betätigungslast in einem Bereich gesetzt ist, der den Betätigungsbeträgen entspricht, die größer sind als die der zweiten maximalen Betätigungslast (N2) entsprechenden Beträge, und
so konfiguriert ist, um einen zweiten Lastabfall (N6) bereitzustellen, der eine Differenz zwischen der zweiten maximalen Betätigungslast (N2) und der zweiten Zwischen-Betätigungslast (N4) darstellt, wobei der zweite Lastabfall (N6) so gesetzt ist, dass er größer oder gleich 1/4 der zweiten maximalen Betätigungslast (N2) ist.

6. Das Spreizsitzfahrzeug (1) gemäß irgendeinem der Ansprüche 1 bis 5, **dadurch gekennzeichnet, dass** das Spreizsitzfahrzeug (1) ferner eine Beleuchtungseinrichtung (8) umfasst und der Lenker-Schalter (20) so konfiguriert ist, um die im Spreizsitzfahrzeug (1) enthaltene Beleuchtungseinrichtung (8) zu betätigen.

7. Das Spreizsitzfahrzeug (1) gemäß Anspruch 6, **dadurch gekennzeichnet, dass** die Beleuchtungseinrichtung Blinker (8) sind, die für einen Blinkbetrieb konfiguriert sind, wobei ein erster Blinkbetrieb der Blinker (8) vorgesehen ist, der der Ersten-Stufe-Betätigung entspricht, und ein zweiter Blinkbetrieb der Blinker (8) vorgesehen ist, der der Zweiten-Stufe-Betätigung entspricht, wobei sich der der Ersten-Stufe-Betätigung entsprechende erste Blinkbetrieb der Blinker (8) von dem der Zweiten-Stufe-Betätigung entsprechenden zweiten Blinkbetrieb der Blinker (8) unterscheidet.

8. Das Spreizsitzfahrzeug (1) gemäß irgendeinem der Ansprüche 1 bis 7, **dadurch gekennzeichnet, dass** der Lenker-Schalter (20) so konfiguriert ist, dass er eine im Spreizsitzfahrzeug (1) enthaltene Vorrichtung betätigt, und so ausgelegt ist, dass die Ausführung der Ersten-Stufe-Betätigung oder der Zweiten-Stufe-Betätigung, während die Vorrichtung einen der Ersten-Stufe-Betätigung oder der Zweiten-Stufe-Betätigung entsprechenden Vorgang ausführt, den aktuell ausgeführten Vorgang der Vorrichtung abbricht.

9. Das Spreizsitzfahrzeug (1) gemäß Anspruch 6, **dadurch gekennzeichnet, dass** eine Betätigung der Beleuchtungsvorrichtung konfiguriert ist, um entweder eine erste Betätigung der Beleuchtungsvorrichtung entsprechend der Ersten-Stufe-Betätigung oder eine zweite Betätigung der Beleuchtungsvorrichtung entsprechend der Zweiten-Stufe-Betätigung entsprechend den Fahrbedingungen des Spreizsitzfahrzeugs (1) auszuführen.

10. Das Spreizsitzfahrzeug (1) gemäß Anspruch 9, **dadurch gekennzeichnet, dass** die Beleuchtungseinrichtung ein Scheinwerfer ist,
der Scheinwerfer so konfiguriert ist, um die Lichtabstrahlung auf eine Mehrzahl von Bereichen vor dem Spreizsitzfahrzeug (1) zu steuern, wobei die Mehrzahl von Bereichen zumindest einen oberen Bereich enthält,
der zumindest eine obere Bereich sich teilweise oder vollständig oberhalb einer horizontalen Referenzlinie befindet, wenn sich das Spreizsitzfahrzeug (1) in einer aufrechten Position befindet, und
einen Betrieb des Scheinwerfers, der entweder dem ersten Betrieb des Scheinwerfers zur Anpassung an die Erste-Stufe-Betätigung oder einem zweiten Betrieb des Scheinwerfers zur Anpassung an die Zweite-Stufe-Betätigung entspricht, um Licht auf den zumindest einen oberen Bereich entsprechend den Fahrbedingungen des Spreizsitzfahrzeugs (1) abzugeben.

## Revendications

1. Véhicule à selle (1) comprenant un guidon (6) muni d'au moins une poignée (7L) et un commutateur de guidon (20) prévu sur le guidon (6) et configuré pour permettre au conducteur du véhicule à selle (1) de manipuler le commutateur de guidon (20) tout en tenant la poignée (7L) du guidon (6) d'une main du conducteur en utilisant un doigt de la main tenant la poignée (7L), dans lequel
le commutateur de guidon (20) est configuré pour pouvoir être manipulé à partir d'une position initiale du commutateur de guidon (20) dans une première direction par le conducteur en utilisant le doigt,
le commutateur de guidon (20) est configuré pour revenir à la position initiale dès que le conducteur retire son doigt du commutateur de guidon (20),
le commutateur de guidon (20) est configuré pour fonctionner avec une manipulation de premier étage qui nécessite une première quantité de manipulation (M1) comme quantité de manipulation à partir de la position initiale et une manipulation de second étage qui nécessite une seconde quantité de manipulation (M2) définie pour être supérieure à la première quantité de manipulation (M1) comme quantité de manipulation à partir de la position initiale, dans lequel le commutateur de guidon (20) est configuré pour fournir une charge de manipulation maximale nécessaire pour atteindre la première quantité de manipulation (M1) comme première charge de manipulation maximale (N1), et
une charge de manipulation maximale nécessaire pour atteindre la seconde quantité de manipulation (M2) comme seconde charge de manipulation maximale (N2) est définie pour être supérieure à la première charge de manipulation maximale (N1), et est configurée pour fournir un taux d'augmentation de la charge de manipulation qui varie dans un sens croissant à la fois lorsque la première quantité de manipulation (M1) est dépassée et lorsque la seconde quantité de manipulation (M2) est dépassée, de sorte que le taux d'augmentation de la charge de manipulation variant dans le sens croissant soit perceptible par le doigt de la main du conducteur manipulant le commutateur de guidon (20) comme sensation de manipulation à la fois lorsque la manipulation de premier étage est réalisée et lorsque la manipulation de second étage est réalisée, dans lequel la manipulation de premier étage est une manipulation dans laquelle le conducteur manipule le commutateur de guidon (20) dans la première direction tout en tenant la poignée (7L) sur le guidon (6) en utilisant le doigt de la main tenant la poignée (7L), et la quantité de manipulation à partir de la position initiale du commutateur de guidon (20) est la première quantité de manipulation (M1), la manipulation de second étage est une manipulation dans laquelle le conducteur manipule le commutateur de guidon (20) dans la première direction tout en tenant la poignée (7L) sur le guidon (6) en utilisant le doigt de la main tenant la poignée (7L), et la quantité de manipulation à partir de la position initiale du commutateur de guidon (20) est la seconde quantité de manipulation (M2) supérieure à la première quantité de manipulation (M1), dans lequel le commutateur de guidon (20) est configuré pour revenir à sa position initiale dans une direction opposée à la première direction, lorsque le conducteur réalise la manipulation de premier étage en manipulant le commutateur de guidon (20) dans la première direction tout en tenant la poignée (7L) sur le guidon (6) en utilisant le doigt de la main tenant la poignée (7L), en retirant le doigt du commutateur de guidon (20), **caractérisé en ce que**, le commutateur de guidon est configuré pour revenir à sa position initiale dans une direction opposée à la première direction, lorsque le conducteur réalise la manipulation de second étage en manipulant le commutateur de guidon (20) dans la première direction tout en tenant la poignée (7L) sur le guidon (6) en utilisant le doigt de la main tenant la poignée (7L), en retirant le doigt du commutateur de guidon (20).

2. Véhicule à selle (1) selon la revendication 1, **caractérisé en ce que** la première charge de manipulation maximale (N1) est définie pour être supérieure ou égale à la moitié de la seconde charge de manipulation maximale (N2).

3. Véhicule à selle (1) selon la revendication 1 ou 2, **caractérisé en ce que** le commutateur de guidon (20) est configuré pour fournir une première charge de manipulation intermédiaire (N3) définie comme un creux de la charge de manipulation à atteindre après que la première charge de manipulation maximale (N1) a été atteinte et avant que la seconde charge de manipulation maximale (N2) ne soit atteinte, et configuré pour fournir une première baisse de charge (N5), qui est la différence entre la première charge de manipulation maximale (N1) et la première charge de manipulation intermédiaire (N3), la première baisse de charge (N5) étant définie pour être supérieure ou égale à 1/4 de la première charge de manipulation maximale (N1).

4. Véhicule à selle (1) selon l'une quelconque des revendications 1 à 3, **caractérisé en ce que** la première quantité de manipulation (M1) est définie pour être supérieure ou égale à 1/3 et inférieure ou égale à 2/3 de la seconde quantité de manipulation (M2).

5. Véhicule à selle (1) selon l'une quelconque des revendications 1 à 4, **caractérisé en ce que** le commutateur de guidon (20) est configuré pour fournir une seconde charge de manipulation intermédiaire (N4) définie comme un creux de la charge de manipulation dans une plage correspondant à des quantités de manipulation définies pour être supérieures à la quantité de manipulation correspondant à la seconde charge de manipulation maximale (N2), et
configuré pour fournir une seconde chute de charge (N6), qui est la différence entre la seconde charge de manipulation maximale (N2) et la seconde charge de manipulation intermédiaire (N4), la seconde chute de charge (N6) étant définie pour être supérieure ou égale à 1/4 de la seconde charge de manipulation maximale (N2).

6. Véhicule à selle (1) selon l'une quelconque des revendications 1 à 5, **caractérisé en ce que** le véhicule à selle (1) comprend en outre un équipement d'éclairage (8), et le commutateur de guidon (20) est configuré pour actionner l'équipement d'éclairage (8) inclus dans le véhicule à selle (1).

7. Véhicule à selle (1) selon la revendication 6, **caractérisé en ce que** l'équipement d'éclairage est constitué de clignotants (8) configurés pour une opération de clignotement, une première opération de clignotement des clignotants (8) est prévue pour correspondre à la manipulation de premier étage et une seconde une opération de clignotement des clignotants (8) est prévue pour correspondre à la manipulation de seconde étage, dans lequel la première opération de clignotement des clignotants (8) correspondant à la manipulation de premier étage est différente de la seconde opération de clignotement des clignotants (8) correspondant à la manipulation de second étages.

8. Véhicule à selle (1) selon l'une quelconque des revendications 1 à 7, **caractérisé en ce que** le commutateur de guidon (20) est configuré pour actionner un dispositif inclus dans le véhicule à selle (1), et est configuré de sorte que la réalisation de la manipulation de premier étage ou de la manipulation de second étage lorsque le dispositif réalise une opération correspondant à la manipulation de premier étage ou à la manipulation de second étage annule l'opération actuellement réalisée du dispositif.

9. Véhicule à selle (1) selon la revendication 6, **caractérisé en ce qu'un** fonctionnement de l'équipement d'éclairage est configuré pour effectuer soit une première opération de l'équipement d'éclairage afin de correspondre à la manipulation de premier étage, soit une seconde opération de l'équipement d'éclairage afin de correspondre à la manipulation de second étage, en fonction des conditions de conduite du véhicule à selle (1).

10. Véhicule à cheval (1) selon la revendication 9, **caractérisé en ce que** l'équipement d'éclairage est un phare,
le phare est configuré pour commander l'émission de lumière vers une pluralité de zones situées à l'avant du véhicule à selle (1), la pluralité de zones comprenant au moins une zone supérieure, l'au moins une zone supérieure est située partiellement ou entièrement au-dessus d'une ligne de référence horizontale lorsque le véhicule à selle (1) est en position verticale, et
un fonctionnement du phare correspondant soit au premier fonctionnement du phare pour correspondre à la manipulation de premier étage, soit à un second fonctionnement du phare pour correspondre à la manipulation de second étage, afin d'émettre de la lumière vers l'au moins une zone supérieure en fonction des conditions de conduite du véhicule à selle (1).
